(19) Europäisches Patentamt
European Patent Office
Office européen des brevets

(11) EP 1 691 239 B1

(12) **EUROPEAN PATENT SPECIFICATION**

(45) Date of publication and mention of the grant of the patent:
**03.12.2008 Bulletin 2008/49**

(51) Int Cl.:
***G03G 15/00*** *(2006.01)* ***B23B 25/00*** *(2006.01)*
***B23B 31/40*** *(2006.01)*

(21) Application number: **06002918.8**

(22) Date of filing: **14.02.2006**

(54) **Elastic cylinder supporting member to be inserted into a cylinder for a electrophotographic photoreceptor**

Elastisches Zylinderstützelement zum Einfügen in einen Zylinder für einen elektrofotografischen Fotorezeptor

Membre élastique de support de cylindre à insérer dans un cylindre pour un photorécepteur électrophotographique

(84) Designated Contracting States:
**DE FR GB**

(30) Priority: **15.02.2005 JP 2005038430**
**03.03.2005 JP 2005059656**

(43) Date of publication of application:
**16.08.2006 Bulletin 2006/33**

(73) Proprietor: **Ricoh Company, Ltd.**
**Tokyo 143-8555 (JP)**

(72) Inventors:
- **Kasai, Shuji**
**Ricoh Company, Ltd.**
**Tokyo 143-8555 (JP)**
- **Saitoh, Kenichi**
**Ricoh Company, Ltd.**
**Tokyo 143-8555 (JP)**

(74) Representative: **Barz, Peter**
**Patentanwalt**
**Kaiserplatz 2**
**80803 München (DE)**

(56) References cited:
**US-A- 5 893 568** **US-B1- 6 212 342**

- **PATENT ABSTRACTS OF JAPAN vol. 2002, no. 12, 12 December 2002 (2002-12-12) -& JP 2002 224905 A (RICOH CO LTD), 13 August 2002 (2002-08-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 691 239 B1

## Description

## BACKGROUND OF THE INVENTION

### Field of the Invention

The present invention relates to a cylinder supporting member which bears a cylinder by being inserted into the cylinder whose peripheral surface is to be subjected to a treatment such as cutting treatments. In addition, the present invention also relates to a method and a device for cutting the peripheral surface of a cylinder.

### Discussion of the Background

Electrophotographic photoreceptors for use in electrophotographic image forming apparatuses such as copiers, printers and facsimile machines typically include a cylindrical substrate and a photosensitive layer formed on the cylindrical substrate. After a flange is set to both ends of the cylindrical photoreceptor, the photoreceptor is set to an image forming apparatus to perform image formation.

Recently, full color image forming apparatuses capable of producing full color images by overlaying plural different color images have been widely used. In this case, formation of a full color image (or a multiple color image) in which plural color images are misaligned (i.e., one or more of plural color images are not formed at the desired positions) is a big problem. In order to prevent occurrence of such an image misalignment problem, the photoreceptor, particularly the cylindrical substrate thereof, is required to have a high dimensional precision.

In attempting to produce a cylindrical substrate with high dimensional precision, published unexamined Japanese patent application No. (hereinafter referred to as JP-A) 10-314843 proposes a method for preparing a cylindrical substrate, which includes subjecting a raw cylindrical substrate to a roundness adjusting treatment using a special device, and then cutting the peripheral surface of the raw cylindrical substrate. However, the manufacturing costs of the substrate prepared by this method increase because the number of manufacturing processes increases due to the roundness adjusting treatment. In addition, the method does not take a countermeasure against vibration of the substrate, which is caused when the substrate is subjected to a cutting treatment. Therefore, a cylindrical substrate with high dimensional precision cannot be produced.

In addition, JP-As 11-160901 and 2003-167361 have disclosed methods which include preparing a raw cylindrical substrate with high dimensional precision and then subjecting the peripheral surface of the raw substrate to a cutting treatment. In these methods, the inner surfaces of the edges of the raw cylindrical substrate are subjected to a treatment to form spigots and then the substrate is subj ected to a cutting treatment while the edges (spigots) are held by a holding member. However, the manufacturing costs of the substrates prepared by these methods increase because the number of manufacturing processes increases due to the spigot forming treatment and a special device is necessary for preparing the spigots.

JP-As 06-198501, 06-304803 and 09-234639 have disclosed methods by which a cylindrical substrate with high dimensional precision is prepared without performing a pretreatment such as the roundness adjusting treatment and the spigot forming treatment. In these methods, cutting is performed on cylindrical substrate while a mid-air elastic material is inserted into the cylindrical substrate. However, the manufacturing costs of the substrate prepared by these method increase because the number of manufacturing processes increases due to attaching and detaching of the mid-air elastic material and a special device is necessary for attaching and detaching the mid-air elastic material.

Japanese Utility Model Patent No. 2604434 discloses a method in which cutting is performed on a raw cylindrical substrate while a heavy load is inserted to the substrate to avoid vibration of the substrate. However, the operational efficiency of this method is low because a heavy load is inserted into and removed from the substrate to be treated before and after the cutting treatment.

JP-A 08-52680 discloses a method in which cutting is performed on a raw cylindrical substrate while the substrate is stabilized with a stabilizing member which is provided on a substrate holding device. Specifically, the stabilizing member includes an air tube which is spirally arranged on the inner surface of the substrate to stabilize the substrate using an air pressure. Therefore, the substrate holding device has a complex structure and a high cost, resulting in increase of the substrate manufacturing costs.

JP-A 2002-224905 discloses a method in which cutting is performed on a substrate having ribs at the inner surface thereof while the substrate is held with a vibration absorbing member inserted in the substrate. However, a problem in that the vibration absorbing member contacting with the ribs are dislocated is caused if the conditions are severely controlled. In this case, a uniform force is not applied to the inner surface of the substrate and thereby a substrate with high dimensional precision is not produced. In addition, when the hardness of the vibration absorbing member is too low, the substrate is vibrated. In contrast, when the hardness is too high, a problem in that the substrate to be treated is held while being deformed because a large force is applied to the substrate by the vibration absorbing member occurs.

In these cases, a substrate with high dimensional precision is not produced.

Further, JP-A 09-239604 discloses a method in which a static pressure supporting member is provided so as to contact with the surface of the cylindrical substrate to be cut to prevent occurrence of vibration.

Because of these reasons, a need exists for a method for preparing a cylindrical substrate with a high dimensional precision without using a special device and without performing an additional process.

US-A-5893568 relates to a device for supporting a hollow substrate having two open ends in an aligned orientation, wherein one end of the substrate is engage-able with a chuck assembly, including: (a) a base for contacting the other end of the substrate; (b) a post coupled to the base, wherein a section of the post is positioned within the substrate, thereby defining a substrate disposed post section; and (c) a spring apparatus coupled to the substrate disposed post section, wherein the spring apparatus is disposed within the substrate and contacts the substrate interior surface, wherein the spring apparatus is compressed by the substrate during misalignment of the substrate with the device and the compressed spring apparatus springs back to push the substrate to the aligned orientation with the device.

US-A-6212342 describes a device for reducing noise and/or vibration in an image forming apparatus. The device has an insert which is disposed inside a photosensitive drum, and the insert is a hollow tubular member including an elastic member having, in a relaxed state, an outer diameter larger than an inner diameter of the said inner surface of the photosensitive drum. The elastic member is configured such that when it is elongated in a longitudinal direction, the outer diameter of the elastic member may be elastically reduced to a diameter equal to or less than the inner diameter of the photosensitive drum, and after insertion, the overall diameter of the insert can be increased such that the outer surface of the insert comes into contact with an inner surface of the drum. The insert can be anchored to the interior of the drum without using adhesive and can be easily removed for recycling purposes.

JP-A-2002-224905 relates to a core for processing a thin-walled core and a processing machine for a thin-walled core. The core is provided with elastic members which are aligned opposedly to the ribs at an inner surface of a thin-walled core, an axial member which preserves the elastic members at locations opposed to the ribs and a fixing member which supports either end of the axial member. JP-A-2002-224905 does not disclose a vibration absorbing member in the form of a plurality of elastic plate flanked by two reinforcing members which are equally spaced by a spacer.

## SUMMARY OF THE INVENTION

Accordingly, an object of the present invention is to provide a cylinder supporting member which bears a cylinder to be subjected to a cutting treatment by being inserted into the cylinder without using a special device and which can well absorb vibration caused by the cutting treatment performed on the cylinder, resulting in formation of a cylindrical substrate with high dimensional precision.

Another object of the present invention is to provide a method and a device for preparing a cylindrical substrate with high dimensional precision.

Yet another object of the present invention is to provide a cylinder with high dimensional precision.

A further object of the present invention is to provide an electrophotographic cylindrical photoreceptor with high dimensional precision.

A still further object of the present invention is to provide an electrophotographic image forming apparatus which can produce color images without causing the image misalignment problem.

Briefly these objects and other objects of the present invention as hereinafter will become more readily apparent can be attained by a cylinder supporting member according to claim 1 including a shaft; and a vibration absorbing member which is located overlying the shaft and whose lateral edge portion elastically deforms along the shaft while being contacted with a part of the inner surface of a cylindrical substrate to absorb vibration of the cylinder when the cylinder supportingmember is inserted into the cylinder. In this regard, "overlying" can include direct contact and allow for intermediate layers (such as resin, metal and air layers).

The vibration absorbing member is a brush including comprises a plurality of elastic plates reinforced by a reinforcing member, or the like, wherein the lateral edge portion of the elastic plates elastically deforms along the shaft (i.e., along the inner surface of the cylinder) by being contacted with a part of the inner surface of the cylinder.

The reinforcing member supporting the elastic plate preferably has a diameter of from 50 to 95%, preferably from 60 to 90% and more preferably from 65 to 85%, of the inside diameter of the cylinder to be treated. In addition, the vibration absorbing member (i.e., the elastic plate in this case) preferably has a spring A hardness of from 50 to 95 Hs, preferably from 55 to 90 Hs and more preferably from 60 to 80 Hs when the hardness is measured by a method described in JIS K6301. The elastic plate preferably has plural projections which radially extend and which are arranged at regular intervals in the circumferential direction of the elastic plate.

As another aspect of the present invention, a method for subjecting a cylinder to a cutting treatment, is provided which includes inserting the cylinder supporting member mentioned above into the cylinder to support the cylinder with the cylinder supporting member; and then cutting the peripheral surface of the cylinder while rotating the cylinder.

As yet another aspect of the present invention, a cutting device is provided which includes the cylinder supporting

member mentioned above configured to support the cylinder; and a cutting tool configured to cut the peripheral surface of the cylinder while rotating the cylinder.

These and other objects, features and advantages of the present invention will become apparent upon consideration of the following description of the preferred embodiments of the present invention taken in conjunction with the accompanying drawings.

## BRIEF DESCRIPTION OF THE DRAWINGS

FIG. 1 is a schematic view illustrating an example of the cylinder supporting member of the present invention;
FIG. 2 is a schematic view illustrating the cylinder supporting member of the present invention, which is illustrated in FIG. 1 and which is inserted into a cylinder;
FIG. 3 is a schematic view illustrating the cylinder which is illustrated in FIG. 2 and whose peripheral surface is subjected to a cutting treatment;
FIGs. 4A-4C are schematic views illustrating elastic materials for use in the cylinder supporting member of the present invention;
FIG. 5 is a schematic view illustrating an example of a cylinder supporting member not according to the present invention;
FIG. 6 is a schematic view illustrating the cylinder supporting member, which is illustrated in FIG. 5 and which is inserted into a cylinder;
FIGs. 7A-7C are schematic views illustrating examples of the linear elastic member for use in the cylinder supporting member illustrated in FIG. 5;
FIG. 8 is a schematic perspective view illustrating the cylinder supporting member, which is illustrated in FIG. 5;
FIG. 9 is a schematic perspective view illustrating a conventional cylinder supporting member;
FIGs. 10-13 are schematic views illustrating embodiments of an electrophotographic image forming apparatus; and
FIG. 14 is a schematic view illustrating an instrument for measuring the deformation of a cylinder.

## DETAILED DESCRIPTION OF THE INVENTION

At first, the cylinder supporting member of the present invention will be explained referring to drawings.

FIG. 1 illustrates an example of the cylinder supporting member of the present invention. A cylinder supporting member A is inserted into a raw cylindrical substrate whose peripheral surface is to be subjected to a cutting treatment. By using this cylinder supporting member, the cutting treatment for the raw cylindrical substrate can be highly precisely performed because vibration of the raw cylindrical substrate can be suppressed. The cylinder supporting member A includes a shaft 605, and a cylinder holding member 607 for holding the inner edge surface of a raw cylindrical substrate, and an introductory member 606, which are connected to the shaft 605. In addition, the cylinder supporting member includes a vibration absorbing member 601 which is provided overlying the shaft 605 at regular intervals to absorb vibration of the raw cylindrical substrate caused by a cutting treatment for the surface of the cylinder and which has a relatively large diameter compared to an upper supporting member 602 and a lower supporting member 603; the upper and lower supporting members 602 and 603 which serve as a reinforcing member and which are also provided overlying the shaft 605 to reinforce the vibration absorbing member 601 while sandwiching the vibration absorbing member 601 so that the vibration absorbing member 601 can contact with the inner surface of the raw cylindrical substrate while applying a strong force to the cylinder; and a spacer 604 which is provided overlying the shaft 605 to separate at regular intervals the combinations of the upper supporting member 602, the vibration absorbing member 601 and the adjacent lower supporting member 603.

Namely, the cylinder holding member 607 and the introductory member 606 are fixed on both the sides of the shaft 605, and the shaft 605 is inserted into a center hole of the vibration absorbing member 601 which has a plate form and which is elastic, wherein the vibration absorbing member 601 is supported by the upper and lower supporting members 602 and 603, and the spacer 604 is provided to arrange a combination of the upper supporting member 602, the vibration absorbing member 601 and the adjacent lower supporting member 603 at regular intervals.

The diameter of the vibration absorbing member 601 is larger than the inside diameter of the raw cylindrical substrate to be treated, and the tip portion of the vibration absorbing member 601 can elastically deform along the inner surface of the raw cylindrical substrate (i. e., in the direction parallel to the shaft 605).

Each of the vibration absorbing member 601, the upper and lower supporting members 602 and 603, and the spacer 604 has a hole through which the shaft 605 is inserted, and the members are fixed so as not to move along the shaft after they are assembled to provide the cylinder supporting member A.

The upper and lower supporting members 602 and 603 are arranged so as to closely contact with the vibration

absorbing member 601, or are adhered to the vibration absorbing member 601 with an adhesive or the like. The upper and lower supporting members 602 and 603 are made of an elastic material such as rubbers and other elastic materials or a rigid material having such a stiffness as not to prevent elastic deformation of the vibration absorbing member 601. The upper and lower supporting members 602 and 603 (i.e., the reinforcing member) preferably has a diameter of from 50 to 95%, preferably from 60 to 90% and more preferably from 65 to 85%, of the inside diameter of the cylinder, and the vibration absorbing member 601 has a spring A hardness of from 50 to 95 Hs, preferably from 55 to 90 Hs and more preferably from 60 to 80 Hs.

FIG. 2 illustrates the cylinder supporting member A which is inserted into a (raw) cylindrical substrate 608. Since the vibration absorbing member 601 has a diameter lager than the inside diameter of the cylindrical substrate 608, the tip portion of the vibration absorbing member 601 is closely contacted with the inner surface of the raw cylindrical substrate 608, and thereby, occurrence of vibration of the raw cylindrical substrate 608 during a cutting treatment can be prevented. Therefore, a cylindrical substrate having high dimensional precision so as to be used for an electrophotographic photoreceptor can be prepared.

FIG. 3 illustrates the cylindrical substrate through which the cylinder supporting member is inserted and whose peripheral surface is cut with a cutting device. The combination of the raw cylindrical substrate 608 and the cylinder supporting member A, which is illustrated in FIG. 2, is set to a main body (not shown) of a cutting device manually or automatically using an automatic feeding system (not shown). At this time, the end of the raw cylindrical substrate 608 opposite to the end engaged with the cylinder holding member 607 is engaged with a second cylinder holding member 610 which is connected with a connection member 611 which is connected with the main body of the cutting device.

After the raw cylindrical substrate 608 is set to the cutting device, a motor (not shown) of the cutting device is driven to rotate the raw cylindrical substrate 608 using a transmission device such as belts and chains. After the cylindrical substrate 608 is stably rotated, a turning tool 612 is moved from one end of the cylindrical substrate 608 to the other end thereof in the direction parallel to the shaft 605 to cut the peripheral surface of the cylindrical substrate 608. Numeral 609 denotes another connection member which is also connected with the main body of the cutting device.

In FIG. 3, the introductory member 606 is not contacted with the second cylinder holding member 610, but can be connected therewith. In addition, in FIG. 3 single-side driving is performed on the raw cylindrical substrate 608, i.e., the side of substrate contacted with the cylinder holding member 607 is rotated in the direction indicated by an arrow, but double-side driving methods and other driving methods can also be used.

FIGs. 4A to 4C illustrate examples of the vibration absorbing member for use in the cylinder supporting member of the present invention. The vibration absorbing member 601 illustrated in FIG. 4A has an X form and has a center hole, wherein the four blades are arranged at regular intervals (i.e. , at an angle of 90 degree). The vibration absorbing member 601 illustrated in FIG. 4B has six blades and a center hole, wherein the six blades are arranged at regular intervals (i.e., at an angle of 60 degree). The vibration absorbing member 601 illustrated in FIG. 4B has eight blades and a center hole, wherein the eight blades are arranged at regular intervals (i.e., at an angle of 45 degree).

The material and shape of the spacer 604 are not particularly limited as long as the spacer has a function of fixing the vibration absorbing member at a predetermined position. However, when a hard material is used for the spacer 604, the diameter of the spacer is preferably smaller than the inside diameter of the raw cylindrical substrate 608.

Specific examples of the material constituting the raw cylindrical substrate 608 include known metals such as aluminum, copper, iron and zinc, but are not limited thereto.

FIG. 5 illustrates another example of the cylinder supporting member which is not according to the present invention. In FIG. 5, a cylinder supporting member B includes a shaft 623, a vibration absorbing member 629 including a linear elastic material 621, a spacer 622, an introductory member 624 and a cylinder holding member 625. The shaft 623 is inserted into the vibration absorbing member 629 and the spacer 624 so that the vibration absorbing member 629 and the spacer 624 are fixed so as not move in the direction parallel to the shaft 624 after the cylinder supporting member B is assembled.

FIG. 6 illustrates the cylinder supporting member B inserted into a raw cylindrical substrate 626. Since the vibration absorbing member 629 has a diameter larger than the inside diameter of the cylindrical substrate 626, the tip portion of the vibration absorbing member 601 is closely contacted with the inner surface of the cylindrical substrate 626, and thereby occurrence of vibration of the cylindrical substrate 626 during a cutting treatment can be prevented. Therefore, a cylindrical substrate with high dimensional precision so as to be used for an electrophotographic photoreceptor can be prepared.

Similarly to the first-mentioned example, the combination of the cylindrical substrate 626 and the cylinder supporting member B, which is illustrated in FIG. 6, is set to a main body (not shown) of a cutting device (not shown) manually or automatically using an automatic feeding system (not shown). At this time, the end of the cylindrical substrate 626 opposite to the end engaged with the cylinder holding member 625 is engaged with a second cylinder holding member 627 which is connected with a connection member 628 which is connected with the main body of the cutting device.

After the cylindrical substrate 626 is set to the cutting device, a motor (not shown) of the cutting device is driven

to rotate the cylindrical substrate 626 using a transmission device such as belts and chains. After the cylindrical substrate 626 is stably rotated, a turning tool is moved from one end of the cylindrical substrate 626 to the other end thereof in the direction parallel to the shaft 623 to cut the peripheral surface of the cylindrical substrate 626.

In FIG. 6, the introductory member 624 is not contacted with the second substrate supporting member 627, but can be contacted therewith. In addition, similarly to the first-mentioned example, known driving methods such as single-side driving methods and double-side driving methods can be used for rotating the cylindrical substrate 626.

FIGs. 7A to 7C illustrate cross sections of linear elastic materials for use as the linear elastic-material 621 of the vibration absorbing member 629. The materials illustrated in FIGs. 7A-7C have an elliptical, rectangular or trapezoidal cross section, respectively. The linear elastic material 621 preferably satisfies the following relationship:

$$w/t \geq 1.0$$

wherein w and t represent the width and the thickness of a piece of the linear elastic material 621, respectively.

The material and shape of the shaft are not particularly limited, and known materials such as steels (carbon steels, carbon tool steels, high speed tool steels, nickel-chromium steels, chromium-molybdenum steels, etc.), stainless steels, brass steels, aluminum, aluminum alloys, and zinc alloys can be used therefor.

The material and shape of the linear elastic material 621 are not particularly limited, and a proper material is used therefor so that the function of the linear elastic material can be performed. Specific examples of the materials for use in the linear elastic material 621 include natural rubbers, butadiene rubbers, acrylic rubbers, urethane rubbers, neoprene rubbers, etc.

The diameter (D) of the vibration absorbing member 629 is longer, preferably by 1 mm or more, than the inside diameter of the raw cylindrical substrate 626 to be subjected to a cutting treatment to effectively absorb the vibration of the substrate caused by the cutting treatment. It is more preferable that the diameter (D) is 5 to 20 mm longer than the inside diameter of the raw cylindrical substrate 626.

The linear elastic material 621 preferably has a hardness of from 30 to 90 Hs, and more preferably from 40 to 70 Hs, when the hardness is determined by the method described in JIS K6301 concerning the spring A-form method. When the hardness is too low, it is difficult to absorb vibration of the raw cylindrical substrate caused by a cutting treatment. In contrast, when the hardness is too high, a problem in that the raw cylindrical substrate to be treated is deformed tends to occur. If such a deformed raw cylindrical substrate is subjected to a cutting treatment, the raw cylindrical substrate is greatly vibrated, and thereby a cut cylindrical substrate with desired dimensional precision cannot be produced.

The ratio (w/t) of the width (w) of a piece of the linear elastic material of the vibration absorbing member to the thickness (t) thereof is not less than 1.0, and preferably from 1.1 to 20. If the ratio (w/t) is too low, the linear elastic material tends to be twisted when the vibration absorbing material is inserted into a cylindrical substrate, and thereby the linear elastic material is not uniformly contacted with the inner surface of the raw cylindrical substrate. Therefore, the vibration absorbing member cannot uniformly absorb vibration of cylindrical substrate caused by a cutting treatment, and thereby the surface of the raw cylindrical substrate cannot be uniformly cut. Therefore, a cylindrical substrate with such high dimensional precision as to be used for electrophotographic photoreceptors can be produced.

In addition, the width (w) of a piece of the linear elastic material of the vibration absorbing material is preferably not greater than 20%, and more preferably from 1 to 11%, of the peripheral length ($2\pi r$, wherein r represents the diameter of the raw cylindrical substrate to be treated). When the width (w) is too long, the vibration absorbing member can be neither easily inserted into nor easily released from the cylindrical substrate. Therefore, the cutting treatment is troublesome. Further, all of the pieces of the linear elastic member cannot be contacted with the inner surface of the raw cylindrical substrate, and thereby vibration of the raw cylindrical substrate caused by the cutting treatment cannot be well absorbed.

Further, the vibration absorbing material preferably satisfies the following relationship

$$0.14 \leq n \times w1 \times (L/A) \leq 0.95$$

wherein n represents the number of pieces of the linear elastic material contacted with the inner surface of the cylindrical substrate; w1 represents the length in the width direction of the portion of a piece of the linear elastic material, which portion is contacted with the inner surface of the cylindrical substrate; L represents the length in the long direction of the portion of a piece of the linear elastic material, which portion is contacted with the inner surface of the cylindrical substrate; and A represents the total area of the inner surface of the cylindrical substrate. The length L is illustrated in FIG. 6.

When the value of (n x w1 x (L/A)) is too small, the vibration absorbing member cannot well absorb vibration

of the cylindrical substrate in a cutting treatment. In contrast, when the value is too large, the pieces of linear elastic material interfere with each other. Therefore, the vibration absorbing member cannot uniformly absorb vibration of the raw cylindrical substrate caused by a cutting treatment, and thereby the surface of the raw cylindrical substrate cannot be uniformly cut. Therefore, a cylindrical substrate with such high dimensional precision as to be used for electrophotographic photoreceptors cannot be prepared.

Furthermore, the linear elastic material preferably has a restoring force (F) of not greater than 58.8 Pa (0. 60 gf/cm$^2$), and more preferably not greater than 44.1 Pa (0.45 gf/cm$^2$), which is measured using a force gauge at a portion of a linear elastic material apart from a bending point by 20 mm, wherein the linear elastic material is bent by 90 degree at the bending point.

When the restoring force F is too large, a problem in that the raw cylindrical substrate, into which the cylinder supporting member is inserted, is deformed occurs. In this case, the raw cylindrical substrate is greatly vibrated. Therefore, a cylindrical substrate with such high dimensional precision as to be used for electrophotographic photoreceptors cannot be prepared.

Any known cylinders (i.e., drums) having good electroconductivity can be used as the cylindrical substrate, and a proper cylinder is selected so as to fit the purpose thereof. Among these materials, cylinders made of an electroconductive material or cylinders including an insulating cylindrical material whose surface is subjected to an electroconductive treatment are preferably used. Specific examples of the cylinders include cylinders made of a metal such as aluminum, nickel, iron, copper, gold and alloys of these metals; cylinders which are made of an insulating material such as polyester resins, polycarbonate resins, polyimide resins and glass and on which a thin film of a metal such as aluminum, silver and gold or an electroconductive material such as $In_2O_3$ and $SnO_2$ is formed; cylinders made of a resin in which a powder of an electroconductive material such as carbon black, graphite, aluminum, copper and nickel; cylindrical papers which are subjected to an electroconductive treatment; etc.

Among these cylindrical materials, aluminum alloys are preferably used. Specific examples thereof include aluminum alloys of JIS 1000 types, JIS 3000 types and JIS 6000 types. In addition, cylinders made of magnesium alloys, nickel or polymers can also be preferably used.

The material and shape of the spacer are not particularly limited as long as the spacer performs such a function as to fix the vibration absorbing member to a predetermined position of the shaft of the cylinder supporting member. The diameter of the spacer is preferably smaller than the inside diameter of the raw cylindrical substrate to be treated.

FIG. 8 is a perspective view illustrating the second-mentioned vibration absorbing material 629, which includes the shaft 623 and the linear elastic material 621 having a brush form.

Next, an electrophotographic photoreceptor including the cylindrical substrate subjected to a cutting treatment using the above-mentioned cylinder supporting member; and a photosensitive layer located overlying the peripheral surface of the cylindrical substrate. The photoreceptor can further include other layers such as protective layers located overlying the photosensitive layer, and undercoat layers and/or intermediate layers located between the substrate and the photosensitive layer.

The photosensitive layer may be a single-layered photosensitive layer or a multi-layered photosensitive layer such as combinations of a charge generation layer (hereinafter sometimes referred to as a CGL) and a charge transport layer (hereinafter sometimes referred to as a CTL) located overlying or below the CGL.

Among the multi-layered photosensitive layers, photosensitive layers including a CGL and a CTL located overlying the CGL are preferable. The photosensitive layers can include other layers such as protective layers located overlying the photosensitive layers, and intermediate layers which are formed between the photosensitive layer and the protective layer.

The CGL includes a chargegeneration material(hereinafter sometimes referred to as a CGM) as a main component, and optionally includes a binder resin and/or other components. For the CGL, known CGMs such as inorganic CGMs and organic CGMs can be used. Specific examples of the inorganic CGMs include crystalline selenium, amorphous selenium, selenium-tellurium, selenium-tellurium-halogen, selenium-arsenic compound, etc. Specific examples of the organic CGMs include C. I. (color index) Pigment Blue 25 (CI21180), C.I. Pigment Red 41 (CI21200), C.I. Acid Red 52 (CI45100), C. I. Basic Red 3 (CI45210), azo pigments having a carbazole skeleton, azo pigments having a distyryl benzene skeleton, azo pigments having a triphenyl amine skeleton, azo pigments having a dibenzothiophene skeleton, azo pigments having an oxadiazole skeleton, azo pigments having a fluorenone skeleton, azo pigments having a bisstilbene skeleton, azo pigments having a distyryloxadiazole skeleton, and azo pigments having a distyrylcarbazole skeleton; indigo dyes, e.g., C.I. Vat Brown 5 (C173410) and C.I. Vat Dye (CI73030) ; perylene dyes, e. g. , Algo Scarlet B and Indanthrene Scarlet R, both manufactured by Bayer AG; Squaric dyes; etc.

These pigments and dyes are used alone or in combination.

Suitable binder resins, which are optionally included in the CGL, include polyamide, polyurethane, epoxy resins, polyketone, polycarbonate, polyarylate, silicone resins, acrylic resins, polyvinyl butyral, polyvinyl formal, polyvinyl ketone, polystyrene, poly-N-vinylcarbazole, polyacrylamide, and the like resins.

These resins can be used alone or in combination.

In addition, charge transport polymers can be used as the binder resin of the CGL.
Suitable methods for forming the CGL include thin film forming methods in a vacuum, and casting methods.
Specific examples of such thin film forming methods in a vacuum include vacuum evaporation methods, glow discharge decompositionmethods, ionplatingmethods, sputteringmethods, reaction sputtering methods, CVD (chemical vapor deposition) methods, and the like methods. A layer of the above-mentioned inorganic and organic materials can be formed by one of these methods.
The casting methods for use in forming the CGL typically include the following steps:

(1) preparing a coating liquid by mixing one or more inorganic or organic CGMs mentioned above with a solvent, optionally together with a binder resin and an additive, and then dispersing the mixture to prepare a CGL coating liquid;
(2) coating the CGL coating liquid, which is diluted if necessary, on a substrate by a method such as dip coating, spray coating, bead coating and ring coating; and
(3) drying the coated liquid to form a CGL.

Specific examples of the solvent for use in preparing the CGL coating liquid include acetone, methyl ethyl ketone, methyl isopropyl ketone, cyclohexanone, benzene, toluene, xylene, chloroform, dichloromethane, dichloroethane, dichloropropane, trichloroethane, trichloroethylene, tetrachloroethane, tetradydrofuran, dioxolan, dioxane, methanol, ethanol, ispropyl alcohol, bitanol, ethyl acetate, butyl acetate, dimethylsulfoxide, methyl cellosolve, ethyl cellosolve, propyl cellosolve, etc. These solvents can be used alone or in combination.
Among these solvents, tetrahydrofuran, methyl ethyl ketone, dichloromethane, methanol, and ethanol, which have a boiling point of from 40 to 80 ˚C, are preferably used because of being easily dried after the coating liquid is coated.
Specific examples of the dispersing machines for use in preparing the CGL coating liquid include methods using a dispersion medium, such as ball mills, bead mills, sand mills, andvibrationmills; high speed liquid impact dispersionmethods; etc.
The thickness of the CGL is preferably from 0.01 to 5 μm, and more preferably from 0.05 to 2 μm.
The CTL has functions to retain the charges formed on the photosensitive layer, and to transport the charges generated in the CGL by irradiating the photosensitive layer with imagewise light so that the generated charges are coupled with the charge formed on the photosensitive layer.
In order to retain the charges formed on the photosensitive layer, the CTL is required to have a high electric resistance. In addition, in order to obtain as high electric potential as possible at the charges formed on the photosensitive layer, the CTL is required to have a small dielectric constant. Further, in order that a lighted portion has a low electric potential (i.e., a low residual potential), the CTL is required to have a high charge mobility.
Next, the charge transport layer (CTL) will be explained. The CTL includes at least a charge transport material (CTM), and a binder resin, and optionally includes an additive.
Charge transport materials (CTMs) are classified into positive-hole transport materials and electron transport materials. In addition, CTMs can also be classified into low molecular weight CTMs and charge transport polymers.
Specific examples of the electron transport materials include electron accepting materials such as chloranil, bromanil, tetracyanoethylene, tetracyanoquinodimethane, 2,4,7-trinitro-9-fluorenon, 2,4,5,7-tetranitro-9-fluorenon, 2,4,5,7-tetanitroxanthone, 2,4,8-trinitrothioxanthone, 2,6,8-trinitro-4H-indeno[1,2-b]thiophene-4-one, 1,3,7-trinitrodibenzothiphene-5,5-dioxide, and the like.
These electron transport materials can be used alone or in combination.
Specific examples of the positive-hole transport materials include oxazole derivatives, oxadiazole derivatives, imidazole derivatives, triphenyl amine derivatives, 9-(p-diethylaminostyrylanthrathene), 1,1-bis-(4-dibenzylaminophenyl) propane, styryl anthrathene, styryl pyrazoline, phenyl hydrazone, α-phenyl stilbene derivatives, thiazole derivatives, triazole derivatives, phenazine derivatives, acridine derivatives, benzofuran derivatives, benzimidazole derivatives, thiophene derivatives, etc.
The positive-hole transport materials can be used alone or in combination.
Specific examples of the charge transport polymers for use in the photoreceptor of the present invention are as follows.

(a) polymers having a carbazole ring

Specific examples of such materials include poly-N-vinyl carbazole, and the compounds disclosed in JP-As 50-82056, 54-9632, 54-11737, 04-175337, 04-183719, and 06-234841.

(b) polymers having a hydrazone skeleton

Specific examples of such materials include the compounds disclosed in JP-As. 57-78402, 61-20953,

61-296358, 01-134456, 01-179164, 03-180851, 03-180852, 03-50555, 05-310904 and 06-234840.

(c) Polysilylene compounds

Specific examples of such polymers include the polysilylene compounds disclosed in JP-As 63-285552, 01-88461, 04-264130, 04-264131, 04-264132, 04-264133 and 04-289867.

(d) Polymers having a triaryl amine skeleton

Specific examples of such polymers include N,N-bis(4-methylphenyl)-4-aminopolystyrene, and the compounds disclosed in JP-As 01-134457, 02-282264, 02-304452, 04-133065, 04-133066, 05-40350 and 05-202135.

(e) Other polymers

Specific examples of such polymers include condensation products of nitropyrene with formaldehyde, and the compounds disclosed in JP-As51-73888,56-150749,06-234836and06-234837.

In addition, charge transport materials such as polycarbonate resins having a triaryl amine structure, polyurethane resins having a triaryl amine structure, polyether resins having a triaryl amine structure, etc. can also be used as charge transport polymers in the photoreceptor for use in the present invention. Specific examples of such charge transport polymers include the compounds disclosed in JP-As 64-1728, 64-13061, 64-19049, 04-11627, 04-225014, 04-230767, 04-320420, 05-232727, 07-56374, 09-127713, 09-222740, 09-265197, 09-211877 and 09-304956.

Further, copolymers (such as random, block and graft copolymers) and star polymers, which are obtained from a known monomer and a monomer having an electron donating group, can also be used as the charge transport polymers. Furthermore, crosslinking polymers having an electron donating group disclosed in, for example, JP-A 03-109406, can also be used as the charge transport polymers.

Specific examples of the binder resin for use in the CTL include polycarbonate resins, polyester resins, methacrylic resins, acrylic resins, polyethylene resins, polyvinyl chloride resins, polyvinyl acetate resins, polystyrene resins, phenolic resins, epoxy resins, polyurethane resins, polyvinilidene chloride resins, alkyd resins, silicone resins, polyvinyl carbazole resins, polyvinylbutyral resins, polyvinylformal resins, polyacrylate resins, polyacrylamide resins, phenoxy resins, etc. These resins can be used alone or in combination.

In addition, the CTL can includes a copolymer obtained from a crosslinkable binder resin and a crosslinkable CTM.

The CTL can be typically prepared by coating a coating liquid which is prepared by dissolving or dispersing a CTM and a binder resin in a proper solvent; and then drying the coated liquid. The CTL can optionally include a proper amount of additives such as plasticizers, antioxidants, and leveling agents.

The thickness of the CTL is not particularly limited, but is preferably from 5 to 100 μm. However, in order to produce high definition images (such as images with 1200 dpi) for which a need exists recently, the CTL preferably has a thin thickness of from 5 to 30 μm.

The single-layered photosensitive layer typically includes a CGM, a CTM, and a binder resin, and optionally includes other components. Specific examples of the CGM, CTM and binder resin include the materials mentioned above. Specific examples of the other components include plasticizers, particulate materials, and other additives.

Next, single-layered photosensitive layer will be explained.

The single-layered photosensitive layer has a thickness of from 5 to 100 μm, and preferably from 5 to 50 μm. When the photosensitive layer is too thin, the resultant photosensitive layer has poor charging property. In contrast, when the photosensitive layer is too thick, the resultant photosensitive layer has poor photosensitivity.

The photoreceptor for use in the present invention optionally includes a protective layer which is located overlying the photosensitive layer and which includes at least a binder resin, and a CTM, and optionally includes other components which can improve the adhesiveness, smoothness and chemical stability of the protective layer. Specific examples of the CTM and binder resin include the materials mentioned above.

The protective layer typically has a thickness of from 1 to 15 μm, and preferably from 1 to 10 μm.

The photoreceptor can includes an undercoat layer between the cylindrical substrate and the photosensitive layer, to improve adhesiveness of the photosensitive layer to the cylindrical substrate, to prevent formation of moiré fringe in an image, to improve the coating property of a coating liquid for the layer to be formed on the undercoat layer, and to reduce the residual potential of the resultant photosensitive layer.

The undercoat layer typically includes a resin, and a particulate material, and optionally includes other components.

Specific examples of the resins for use in the undercoat layer include water-soluble resins such as polyvinyl alcohol resins,casein,andsodium polyacrylate;alcohol-soluble resins, such as nylon copolymers, and methoxymethylated

nylons; and crosslinked such as polyurethane resins, melamine resins, alkyd-melamine resins, and epoxy resins; etc.

Specific examples of the particulate materials include metal oxides such as titanium oxide, silica, alumina, zirconium oxide, tin oxide, and indium oxide; metal sulfides; metal nitrides; etc.

The thickness of the undercoat layer is not particularly limited, but is typically from 0.1 to 10 μm, and preferably from 1 to 5 μm.

In addition, an intermediate layer including a resin as a main component can be formed between the cylindrical substrate and the photosensitive layer to improve the adhesiveness of the substrate to the photosensitive layer, and to improve the charge blocking property of the photoreceptor. Since a photosensitive layer coating liquid including an organic solvent is typically coated on the intermediate layer, the resin constituting the intermediate layer preferably has a good resistance to organic solvents. Specific examples of the resins include the resins mentioned above for use in the undercoat layer.

Since the photoreceptor described herein has the cylindrical substrate subjected to a cutting treatment using the cylinder supporting member of the present invention, the photoreceptor has high dimensional precision. Therefore the photoreceptor can produce high definition full color images without defective images.

Next, the image forming apparatus and image forming method will be explained referring to drawings.

The image forming apparatus includes at least the photoreceptor mentioned above, an electrostatic latent image forming device, a developing device, a transfer device and a fixing device. The image forming apparatus can optionally include other devices such as discharging devices, cleaning devices, toner recycling devices, and controllers.

The image forming method includes an electrostatic latent image forming process in which an electrostatic latent image is formed on the above-mentioned photoreceptor, a developing process in which the electrostatic latent image is developed with a developer including a toner to form a toner image, a transfer process in which the toner image from the photoreceptor to a receiving material optionally via an intermediate transfer medium, and a fixing process in which the toner image is fixed onto the receiving material to produce a copy. The image forming method can optionally include other processes such as discharging processes, cleaning processes, toner recycling processes, and controlling processes.

The image forming method can be well performed using the image forming apparatus of the present invention. Specifically, the electrostatic latent image forming process is performed with the electrostatic latent image forming device. The developing process is performed with the developing device mentioned above. In addition, the transferring process and the fixing process are performed with the transferring device and the fixing device mentioned above, respectively.

These processes and devices will be explained in detail.

<u>Electrostatic latent image forming process and device</u>

In the electrostatic latent image forming process, an electrostatic latent image is formed on an electrostatic latent image bearing member, The photoreceptor described herein is used as the electrostatic latent image bearing member. In order to form an electrostatic latent image on the photoreceptor, the electrostatic latent image forming device preferably includes at least a charger configured to uniformly charge the surface of the photoreceptor, and a light irradiating device configured to irradiate the surface of the charged photoreceptor with imagewise light.

The charging process is performed by applying a voltage to the surface of the photoreceptor with a charger.

The charger is not particularly limited, and a proper charger is used so that the charger can fit the purpose thereof. Specific examples of the chargers include known contact chargers having an electroconductive or semiconductive roller, a brush, a film or a rubber blade as a charging member; and non-contact chargers utilizing corona discharging such as corotrons and scorotrons.

The light irradiation process can be performed, for example, by irradiating the charged photoreceptor with imagewise light using a light irradiator.

The light irradiator is not particularly limited, and any known light irradiators can be used as long as the light irradiators can irradiate the charged photoreceptor with imagewise light. Specific examples of the light irradiators include optical devices for copiers, rod lens arrays, laser optical devices, and optical devices using a liquid crystal shutter.

Irradiation of imagewise light can be performed on the image bearing member from the front side (i.e., from the photosensitive layer side) thereof or from the backside (i.e., from the substrate side) thereof.

<u>Developing process and developing device</u>

In the developing process, the electrostatic latent image formed on the photoreceptor is developed with a toner (or a developer including a toner) to visualize the electrostatic latent image using a developing device.

The developing device is not particularly limited, and a proper developing device is used so that the developing device fits for the purpose of the developing device. For example, developing devices containing a toner or a developer therein and having a developing element which supplies the toner to the photoreceptor with or without contacting the

photoreceptor can be used. The developing device preferably has a toner container.

The developing device may be a dry developing device which includes a developing section including a dry developer to develop one or more color images or a wet developing device which includes a developing section including a liquid developer. The developing device may have plural developing sections to form multicolor images or full color images. For example, a dry developing device including an agitator configured to agitate a developer to charge a toner included in the developer, and a developer bearing member configured to bear the developer thereon using a rotatable magnet roller to supply the toner to the photoreceptor can be used.

In such a dry developing device, a toner and a carrier are agitated to charge the toner. The toner and carrier are then fed to the surface of the developer bearing member (i.e., the magnet roller) so as to form a magnetic brush on the surface of the developer bearing member. Since the developer bearing member is arranged in the vicinity of the image bearing member, the toner in the magnetic brush is electrostatically attracted by the electrostatic latent image, resulting in transferring of the toner to the latent image. Thus, the latent image is developed with the toner, resulting in formation of a visual image (i.e., a toner image).

The developer contained in the developing device may be a one-component developer which includes a toner and no carrier, or a two-component developer which includes a toner and a carrier.

Transferring process and image transferring device

In the transferring process, the toner image formed on the photoreceptor is transferred to a receiving material. The toner image formed on the photoreceptor is preferably transfer red to an intermediate transfer medium (i.e., primary transfer process), and the toner image is then transferred to a receiving material (i.e., secondary transfer process). When multiple color images and full color images are formed using two or more color toners, it is preferable that plural color toner images formed on one or more photoreceptors are transferred to an intermediate transfer medium one by one (primary transfer process), and the plural toner images on the intermediate transfer medium are transferred to a receiving material at the same time (second transfer process).

It is preferable that toner images formed on one or more photoreceptors are transferred while applying a voltage to the photoreceptor using a transfer charger which is included in the transfer device. When an intermediate transfer medium is used, the transferring device includes a first transferring member which transfers the toner images on the one or more of photoreceptors to the intermediate transfer medium and a second transferring member which transfers the toner images on the intermediate transfer medium to a receiving material at the same time.

The intermediate transfer medium for use in the image forming apparatus is not particularly limited, and known intermediate transfer media can be used. Specific examples thereof include intermediate transfer belts.

Suitable transfer members for use in the (first and second) transfer devices include transferers which can charge the toner image so that the image is easily released from the photoreceptor and transferred to a receiving material. Plural transfer members can be used for the transfer device. Specific examples of the transfer members include corona chargers, transfer belts, transfer rollers, pressure transfer rollers, adhesive transfer members, etc.

The receiving material is not particularly limited and known receiving materials such as papers and PET films for OHP (overhead projection) can be used.

Fixing process and fixing device

In the fixing process, the toner image transferred to a receiving material is fixed using a fixing device. When plural toner images are transferred on a receiving sheet, the fixing operation can be performed on each of the toner images after each toner image is transferred on the receiving material, or on all the toner images transferred on the receiving material at the same time.

The fixing device is not particularly limited, and a proper fixing device is chosen and used for the image forming apparatus for which the photoreceptor described herein is used. Suitable fixing devices include heat fixing devices which heat toner images while applying a pressure thereto. Specific examples thereof include combinations of a heat roller and a pressure roller, and combinations of a heat roller, a pressure roller and an endless belt.

When a heat fixing device is used, the fixing temperature is preferably from 80 to 200 ˚C.

It is possible to use a photo fixing device which fixes toner images using light in combination with or instead of the fixing device mentioned above.

Discharging process and discharging device

In the discharging process, a discharge bias is applied to the photoreceptor after the image transferring process, to discharge the residual charges remaining on the photoreceptor even after the image transferring process. The discharging process is preferably performed using a discharging device. Any known discharging devices such as discharging

lamps can be used as the discharging device.

Cleaning process and cleaning device

In the cleaning process, toner particles, which remain on the surface of the photoreceptor even after the toner image thereon is transferred onto a receiving material, are removed therefrom using a cleaning device.

Any known cleaners can be used for the cleaning device. Specific examples thereof include magnetic brush cleaners, electrostatic brush cleaners, magnetic roller cleaners, blade cleaners, brush cleaners, and web cleaners.

Toner recycling process and recycling device

In the toner recycling process, the toner particles collected by the cleaner mentioned above are returned to the developing device using a recycling device to be reused for developing electrostatic latent images.

Known powder feeding devices can be used as the recycling device.

Controlling process and controller

The above-mentioned processes are controlled by a controller such as sequencers, and computers.

Next the image forming processes and image forming apparatus will be explained in detail referring to drawings.

FIG. 10 is a schematic view illustrating an embodiment of the image forming apparatus.

In FIG. 10, an image forming apparatus 100 includes a photoreceptor drum 10 (herein after referred to as a photoreceptor 10) serving as the image bearing member; a charging roller 20 serving as the charging device; a light irradiator 30 which serves as the latent image forming device and irradiates imagewise light; a developing device 40 serving as the image developing device; an intermediate transfer medium 50; a cleaner 60 serving as the cleaning device and including a cleaning blade; and a discharging lamp 70 serving as the discharging device. In this regard, the photoreceptor 10 is the photoreceptor used herein, which uses the cylinder subjected to a cutting treatment using the cylinder bearing member.

The intermediate transfer medium 50 is an endless belt, which is rotated in a direction indicated by an arrow by three rollers 51 while tightly stretched by the rollers. At least one of the three rollers 51 applies a transfer bias (first transfer bias) to the intermediate transfer medium 50. A cleaner 90 is provided to clean the surface of the intermediate transfer medium 50.

On the right side of the intermediate transfer medium 50, a transfer roller 80 is provided which applies a transfer bias (a second transfer bias) to a receiving material 95 on which a toner image is to be transferred. In addition, a corona charger 58 is provided to charge the toner image on the intermediate transfer medium 50 before the toner image is transferred to the receiving material 95.

A developing device 40 includes a developing belt 41, and a black developing unit 45K; a yellow developing unit 45Y; a magenta developing unit 45M; and a cyan developing unit 45C, which are arranged in the vicinity of the developing belt 41. Each of the developing units includes a developer containing portion 42 (42K, 42Y, 42M or 42C), a developer supplying roller 43 (43K, 43Y, 43M or 43C), and a developing roller 44 (44K, 44Y, 44M or 44C). The developing belt 41 is an endless belt which is rotated while tightly stretched by plural rollers. The developer is a liquid developer in which toner particles are dispersed in a carrier liquid, or a dry developer which is a two component developer including a toner and a carrier or a one component developer including a toner and no carrier.

In the image forming apparatus 100, the surface of the photoreceptor 10 is uniformly charged with the charging roller 20. The light irradiator 30 irradiates the charged surface of the photoreceptor 10 with imagewise light to form an electrostatic latent image on the photoreceptor 10. The developing device 40 develops the latent image with color toners to sequentially form color toner images on the photoreceptor 10. The color toner images are transferred to the intermediate transfer medium 50 (first image transfer) to form a toner image (e. g. , a full color toner image) while at least one of the rollers 51 applies a transfer bias thereto. The toner image formed on the intermediate transfer medium 50 is then transferred to the receiving material 95 (second image transfer) by a transfer roller 80. Toner particles remaining on the photoreceptor 10 are removed with the cleaner 60 and charges remaining on the photoreceptor 10 are removed by irradiating the photoreceptor 10 with light using the discharging lamp 70.

FIG. 11 illustrates another embodiment of the image forming apparatus. The image forming apparatus has the same configuration as that of the image forming apparatus illustrated in FIG. 10 except that the black, yellow, magenta and cyan developing units 45K, 45Y, 45M and 45C are directly contacted with the photoreceptor 10 without using the developing belt 41. The action of the image forming apparatus is also the same as that of the image forming apparatus illustrated in FIG. 10.

The image forming operations will be explained referring to FIG. 12.

FIG. 12 is the overview of an embodiment of the image forming apparatus, which is a tandem-type color image

forming apparatus.

In FIG. 12, a tandem type color image forming apparatus 500 includes an image forming section 150, a paper feeding section 200, a scanner 300 and an automatic document feeder 400.

The image forming section 150 includes an endless intermediate transfer medium 50, which is provided in the center of the image forming section 150. The intermediate transfer medium 50 is rotated clockwise by rollers 14, 15 and 16 while tightly stretched by the rollers. A cleaner 17 is provided near the roller 15 to remove toner particles remaining on the surface of the intermediate transfer medium.

Four image forming units 18 for forming yellow, magenta, cyan and black toner images are arranged side by side on the intermediate transfer medium 50. The image forming units 18 include respective photoreceptors 10Y, 10M, 10C and 10K. Numeral 120 denotes a tandem type developing device. The developing device 120 includes four developing devices arranged in the respective four image forming units 18. A light irradiator 21 is arranged at a location over the image forming units 18.

A second transfer device 22 is provided below the intermediate transfer medium 50. The second transfer device 22 includes an endless belt 24 which is rotatably stretched by a pair of rollers 23. The endless belt 24 feeds a receiving material so that the toner images on the intermediate transfer medium 50 are transferred to the receiving material while sandwiched by the intermediate transfer medium 50 and the endless belt 24.

A fixing device 25 is arranged at a position near the second transfer device 22. The fixing device 25 includes an endless fixing belt 26 and a pressure roller 27 which presses the fixing belt 26.

In addition, a sheet reversing device 28 configured to reverse the receiving material is provided at a position near the fixing device 25, to produce double-sided copies.

Then the full color image forming operation using the tandem type color image forming apparatus 500 will be explained.

An original to be copied is set on an original table 130 of the automatic document feeder 400. Alternatively, the original is directly set on a glass plate 32 of the scanner 300 after the automatic document feeder 400 is opened, followed by closing of the automatic document feeder 400. When a start button (not shown) is pushed, the color image on the original on the glass plate 32 is scanned with a first traveler 33 and a second traveler 34, which move to the right in FIG. 12. In the case where the original is set on a table of the automatic document feeder 400, at first the original is fed to the glass plate 32, and then the color image on the original is scanned with the first and second travelers 33 and 34. The first traveler 33 irradiates the color image on the original with light and the second traveler 34 reflects the light reflected from the color image to send the color image light to a sensor 36 via a focusing lens 35. Thus, color image information (i.e., black, yellow, magenta and cyan color image data) is provided.

The black, yellow, magenta and cyan color image data are sent to the respective black, yellow, magenta and cyan color image forming units 18, and black, yellow, magenta and cyan color toner images are formed on the respective photoreceptors 10K, 10Y, 10M and 10C.

FIG. 13 is a schematic view illustrating a part of the image forming units 18.

Numeral 20, 61, 62, 63 and 64 denote a charger, a developing device, a transfer roller, a cleaner and a discharger.

The developing device 61 includes agitators 68, a developing roller 72, and a regulating blade 73 configured to form a developer layer 65 on the surface of the developing roller 72. Numeral 71 denotes a toner sensor configured to determine the toner concentration. Character LL denotes imagewise light.

The cleaner 63 includes cleaning blade 75, a cleaning brush 76, a roller 77, a blade 78 and a toner recycling device 79 configured to feed the collected toner particles to the developing device 61.

Referring back to FIG. 12, the thus prepared black, yellow, magenta and cyan color toner images are transferred one by one to the intermediate transfer medium 50 which is rotated by the rollers 14, 15 and 16, resulting in formation of a full color toner image on the intermediate transfer medium 50. Numeral 62 denotes a transfer charger.

In the paper feeding section 200, one of paper feeding rollers 142 is selectively rotated to feed the top paper sheet of paper sheets stacked in a paper cassette 144 in a paper bank 143 while the fed paper sheets are separated one by one by a separation roller 145 when plural paper sheets are continuously fed. The paper sheet is fed to a passage 148 in the image forming section 150 through a passage 146 in the paper feeding section 200, and is stopped once by a registration roller 49. Numeral 147 denotes feed rollers. A paper sheet can also be fed from a manual paper tray 51 to a passage 53 by a separation roller and a pair of rollers 52. The thus fed paper sheet is also stopped once by the registration roller 49. The registration roller 49 is generally grounded, but a bias can be applied thereto to remove paper dust therefrom.

The thus prepared full color toner image on the intermediate transfer medium 50 is transferred to the paper sheet, which is timely fed by the registration roller 49, at the contact point of the second transfer device 22 and the intermediate transfer medium 50. Toner particles remaining on the surface of the intermediate transfer medium 50 even after the second image transfer operation are removed therefrom by the cleaner 17.

The paper sheet having the full color toner image thereon is then fed by the second transfer device 22 to the fixing device 25, and the toner image is fixed on the paper sheet upon application of heat and pressure. Then the paper

sheet is discharged from the image forming section 150 by a discharge roller 56 while the path is properly selected by a paper path changing pick 55. Thus, a copy is stacked on a tray 57. When a double sided copy is produced, the paper sheet having a toner image on one side thereof is fed to the sheet reversing device 28 to be reversed. Then the paper sheet is fed to the second transfer device 24 so that an image is transferred to the other side of the paper sheet. The image is also fixed by the fixing device 25 and then the copy is discharged to the tray 57 by the discharge roller 56.

Since the image forming apparatus and method described herein use the photoreceptor described herein, high quality images without color misalignment can be formed without forming abnormal images

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

## EXAMPLES

### Example 1

An aluminum cylinder having an outside diameter of 60.4 mm, a length of 352 mm and a thickness of 1.0 mm was subjected to a cutting treatment using the cylinder supporting member illustrated in FIG. 1. The conditions are as follows.

Vibration absorbing member

Number of pieces of vibration absorbing member 601: 15 pieces
Number of blades of vibration absorbing member: 4 blades
(i.e., the vibration absorbing member has structure illustrated in FIG. 4A)
Length of blades: 70 mm
Thickness of blades: 1.0 mm
Hardness of blades: 60 Hs

Upper supporting member

Number of pieces of upper supporting member: 15 pieces
Diameter of upper supporting member: 45 mm
Thickness of upper supporting member: 2.0 mm
Hardness of upper supporting member: 80 Hs

Lower supporting member

Number of pieces of lower supporting member: 15 pieces
Diameter of lower supporting member: 45 mm
Thickness of lower supporting member: 2.0 mm
Hardness of lower supporting member: 80 Hs

Thus, a cylindrical substrate having an outside diameter of 60.0 mm, a length of 352 mm and a thickness of 0.8 mm was prepared.

During the cutting treatment, the treated cylinder was visually observed to determine whether the cylinder is vibrated, and released from the cutting device. In addition, deformation of the resultant cylindrical substrate was measured by the following method.

Both ends of the cylindrical substrate are held with holding members. As illustrated in FIG. 14, a knife edge is set so as to be parallel to the line connecting the centers of the holding members. A sensor (LS7030 from KEYENCE) having a light emitting portion and a light receiving portion is set so as to be perpendicular to the line connecting the centers of the holding members to measure deformation of the cut cylinder. The distance between the knife edge and the surface of the cut cylinder is set to be 10 mm, and the distance between the knife edge and the surface of the

cylindrical substrate is precisely measured while the cylindrical substrate is rotated. Deformation of the cylinder is defined as the difference between the maximum and minimum of the distance.

The evaluation results are shown in Table 1.

## Comparative Example 1

The procedure for the cutting treatment and the evaluation of the cylindrical substrate in Example 1 was repeated except that the vibration absorbing member 601 was not used.

The evaluation results are shown in Table 1.

## Comparative Example 2

The procedure for the cutting treatment and the evaluation of the cylindrical substrate in Example 1 was repeated except that the following lower supporting member was used.

Lower supporting member

Number of pieces of lower supporting member: 15 pieces
Diameter of lower supporting member: 25 mm
Thickness of lower supporting member: 2.0 mm
Hardness of lower supporting member: 80 Hs

The evaluation results are shown in Table 1.

## Comparative Example 3

The procedure for the cutting treatment and the evaluation of the cylindrical substrate in Example 1 was repeated except that the hardness of the lower supporting member was changed to 50 Hs.

The evaluation results are shown in Table 1.

## Comparative Example 4

The procedure for the cutting treatment and the evaluation of the cylindrical substrate in Example 1 was repeated except that the following upper supporting member was used.

Upper supporting member

Number of pieces of upper supporting member: 15 pieces
Diameter of upper supporting member: 25 mm
Thickness of upper supporting member: 2.0 mm
Hardness of upper supporting member: 80 Hs

The evaluation results are shown in Table 1.

## Comparative Example 5

The procedure for the cutting treatment and the evaluation of the cylindrical substrate in Example 1 was repeated except that the hardness of the upper supporting member was changed to 50 Hs.

The evaluation results are shown in Table 1.

## Comparative Example 6

The procedure for the cutting treatment and the evaluation of the cylindrical substrate in Example 1 was repeated except that the outside diameter of the upper supporting member was changed to 55 mm.

The evaluation results are shown in Table 1.

**Comparative Example 7**

The procedure for the cutting treatment and the evaluation of the cylindrical substrate in Example 1 was repeated except that the number of the blades of the vibration absorbing member was changed from four to two.
The evaluation results are shown in Table 1.

Table 1

| | Vibration | Deformation (μm) | Releasing of cylinder from the cutting machine |
|---|---|---|---|
| Ex. 1 | No vibration | Good (i.e., hardly deformed) | No |
| Comp. Ex. 1 | Largely Vibrated | 55 | Yes |
| Comp. Ex. 2 | Slightly vibrated | 30 | No |
| Comp. Ex. 3 | Slightly vibrated | 26 | No |
| Comp. Ex. 4 | Slightly vibrated | 25 | Yes |
| Comp. Ex. 5 | Slightly vibrated | 35 | Yes |
| Comp. Ex. 6 | Largely Vibrated | 54 | Yes |
| Comp. Ex. 7 | Largely Vibrated | 57 | Yes |

It is clear from Table 1 that by using the cylinder supportingmember of the present invention, the cutting treatment of a cylinder can be well performed without causing problems such as vibration of the cylinder and releasing of the cylinder from the cutting machine because the pressure of the cylinder supporting member contacting with the inner surface of the cylinder is increased. Therefore, a cylindrical substrate whose surface has good smoothness can be easily produced with neither performing a pretreatment on the cylinder nor using a special holding member for holding the cylinder. Thereby, a cylindrical substrate with such high dimensional precision as to be used for photoreceptors can be produced.
In addition, by using the cylinder supporting member of the present invention, the cutting treatment can be performed while preventing vibration, and thereby a cylindrical substrate having good circularity can be produced. By using such a cylindrical substrate, a photoreceptor capable of producing color images without color misalignment can be provided.

**Example 2**

An aluminum cylinder having an outside diameter of 60.4 mm, a length of 352 mm and a thickness of 1.0 mm was subjected to a cutting treatment using a cylinder supporting member which has a structure illustrated in FIGs. 5 and 8 and which has a number of pieces of a linear elastic material having a rectangular cross section illustrated in FIG. 7B. The conditions are as follows.

Vibration absorbing member

Diameter (L): 70 mm
Width (w) of linear elastic material: 3.0 mm
Thickness (t) of linear elastic material: 1.0 mm
Hardness of linear elastic material (JIS K6301): 60 Hs
Restoring force (F): not greater than 58.8 Pa (0.60 gf/cm$^2$)
(i.e., restoring force of a portion of one piece of the linear elastic material apart from a bending point by 20 mm, wherein the linear elastic material is bent by 90 degree at the bending point)

Ratio of pieces of linear elastic material contacting the inner surface of cylinder (i.e., n x w1 x (L/A)): 0.60 (wherein n represents the number of pieces of the linear elastic materials contacting with the inner surface of the cylindrical substrate; w1 represents the length in the width direction of the portion of a piece of the linear elastic materials, which

portion is contacted with the inner surface of the cylindrical substrate; L represents the length in the long direction of the portion of a piece of the linear elastic materials, which portion is contacted with the inner surface of the cylindrical substrate; and A represents the total area of the inner surface of the cylindrical substrate)

In the cutting treatment, the peripheral surface of the aluminum cylinder was cut with a lathe (SPA-5 X600 from Shoun Kosakusho Co., Ltd.) while the both ends of the cylinder are held with a collet chuck. The conditions of the lathe are as follows:

Rotation number: 5,000 rpm
Feeding speed: 0.15 mm/revolution
Shape of cutting tool: R cutting tool

Thus, a cylindrical substrate having an outside diameter of 60.0 mm, a length of 352 mm and a thickness of 0.8 mm was prepared.

The thus prepared cylindrical substrate was evaluated with respect to the deformation and the ten point mean roughness (Rz).

Method for measuring deformation

Deformation of the cylindrical substrate is evaluated in the same method as mentioned above in Example 1.

Method for measuring ten point mean roughness Rz

Several points of a normal point of the peripheral surface of the resultant cylindrical substrate which was cut without vibration are scanned with a surface roughness measuring instrument (SURFCOM 1400 from Tokyo Seimitsu Co., Ltd.) to determine the ten point mean roughness Rz of the points of the cylinder and the data are averaged. Similarly, the Rz of a vibrating point of the peripheral surface of the resultant cylindrical substrate, which point vibrated when the cutting treatment was performed, is also determined.

The evaluation results are shown in Table 2.

## Example 3

The procedure for preparation and evaluation of the cylindrical substrate in Example 2 was repeated except that the vibration absorbing member was changed to a vibration absorbing member, which has a structure illustrated in FIGs. 5 and 8 and which has a number of pieces of a linear elastic material each having an elliptic cross section illustrated in FIG. 7A, wherein the width (w) is 3.0 mm and the thickness (t) is 1.0 mm. The bending stress (F) of the linear elastic material is not greater than 58.8 Pa (0.60 $gf/cm^2$) .

The evaluation results are shown in Table 2.

## Example 4

The procedure for preparation and evaluation of the cylindrical substrate in Example 2 was repeated except that the ratio of pieces of the linear elastic material contacting the inner surface of the cylinder (i. e. , $n \times w1 \times (L/A)$) was changed to 0.85.

The evaluation results are shown in Table 2.

## Example 5

An aluminum cylinder having an outside diameter of 30.4 mm, a length of 352 mm and a thickness of 1.0 mm was subjected to a cutting treatment using a cylinder supporting member, which has a structure illustrated in FIGs. 5 and 8 and which has a number of pieces of a linear elastic material each having an elliptic cross section illustrated in FIG. 7A. The conditions are as follows.

Vibration absorbing member

Diameter (L) of linear elastic material: 40 mm
Width (w) of linear elastic material: 1.5 mm

Thickness (t) of linear elastic material: 0.7 mm
Hardness of linear elastic material (JIS K6301): 60 Hs
Bending stress (F): not greater than 58.8 Pa (0.60 gf/$cm^2$)
Ratio of pieces of linear elastic material contacting the inner surface of cylinder (i.e., n x w1 x (L/A)): 0.50

The cutting treatment was performed under the same conditions as those mentioned above in Example 2.
Thus, a cylindrical substrate having an outside diameter of 30.0 mm, a length of 352 mm and a thickness of 0.8 mm was prepared.
The thus prepared cylindrical substrate was evaluated by the same method as mentioned above in Example 2.
The evaluation results are shown in Table 2.

**Comparative Example 8**

The procedure for preparation and evaluation of the cylindrical substrate in Example 2 was repeated except that the vibration absorbing member was not used.
The evaluation results are shown in Table 2.

**Comparative Example 9**

The procedure for preparation and evaluation of the cylindrical substrate in Example 2 was repeated except that a conventional cylindrical vibration absorbing member 629a having a structure illustrated in FIG. 9. In FIG. 9, numerals 621 and 623 denote a cylindrical elastic material and a shaft.
The evaluation results are shown in Table 2.

Table 2

| | Ten point mean roughness Rz of normal portion (μm) | Ten point mean roughness Rz of vibrated portion (μm) | Deformation (μm) |
|---|---|---|---|
| Ex. 2 | 0.78 | 0.80* | 11 |
| Ex. 3 | 0.78 | 0.80* | 7 |
| Ex. 4 | 0.80 | 0.78* | 9 |
| Ex. 5 | 0.79 | 0.79* | 10 |
| Comp. Ex. 8 | 0.79 | 2.37 | 78 |
| Comp. Ex. 9 | 0.80 | 1.55 | 47 |
| *: The cylinders of Examples 2 to 5 were hardly vibrated. | | | |

**Preparation of photoreceptor**

After the cylindrical substrates prepared in Examples 2 to 5 and Comparative Examples 8 and 9 were washed, an undercoat layer, a charge generation layer, and a charge transport layer were formed one by one on the peripheral surface of each of the cylindrical substrates.

Preparation of undercoat layer

The following components were mixed to prepare an undercoat layer coating liquid.

| | |
|---|---|
| Titanium oxide | 20 parts |
| Alkyd resin | 10 parts |
| Melamine resin | 10 parts |
| Methyl ethyl ketone | 60 parts |

The undercoat layer coating liquid was coated on the surface of each cylinder by a dip coating method, and the coated liquid was heated for 15 minutes at 150 ˚C to be dried and crosslinked. Thus, an undercoat layer having a

thickness of 5 μm was prepared.

Preparation of charge generation layer (CGL)

The following components were mixed to prepare a charge generation layer coating liquid.

| | |
|---|---|
| Butyral resin (XYHL from Union Carbide Corp.) | 1 part |
| Titanyl phthalocyanine | 9 parts |
| Cyclohexanone | 30 parts |
| Tetrahydrofuran | 30 parts |

The charge generation layer coating liquid was coated on the undercoat layer of each cylinder by a dip coating method, and the coated liquid was heated for 10 minutes at 100 °C to be dried. Thus, a charge generation layer having a thickness of 0.02 μm was prepared.

Preparation of charge transport layer (CTL)

The following components were mixed to prepare a charge transport layer coating liquid.

| | |
|---|---|
| Polycarbonate resin (PANLITE K1300 from Teijin Ltd.) | 10 parts |
| Charge transport material having the following formula | 10 parts |

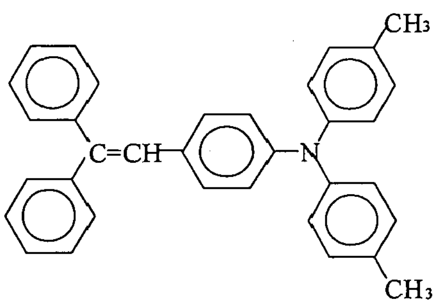

| | |
|---|---|
| Dichloromethane | 80 parts |

The charge transport layer coating liquid was coated on the charge generation layer of each cylinder by a dip coating method, and the coated liquid was heated for 15 minutes at 120 °C to be dried. Thus, a charge transport layer was prepared.

Thus, four kinds of photoreceptors of the present invention and two kinds of comparative photoreceptors were prepared.

After a flange was set to both ends of each of the photoreceptors, the photoreceptor was set in an image forming apparatus, IMAGIO NEO C600 from Ricoh Co. , Ltd. Then five copies of each of a white solid image, a cyan half tone image, a magenta half tone image, a yellow half tone image and a black half tone image were produced, and the images were visually observed to determine whether the copies have an abnormal image.

The evaluation results are shown in Table 3.

Table 3

| | Evaluation results |
|---|---|
| Ex. 2 | All the copies have no color misalignment and no abnormal image. |
| Ex. 3 | All the copies have no color misalignment and no abnormal image. |
| Ex. 4 | All the copies have no color misalignment and no abnormal image. |
| Ex. 5 | All the copies have no color misalignment and no abnormal image. |

(continued)

| | Evaluation results |
|---|---|
| Comp. Ex. 8 | A streak-form uneven image was formed on the portion of the photoreceptor corresponding to the cylindrical substrate having a large ten point mean roughness (Rz) . In addition, the copies have color misalignment. |
| Comp. Ex. 9 | A streak-form uneven image was formed on the portion of the photoreceptor corresponding to the cylindrical substrate having a large ten point mean roughness (Rz). |

## Effects of the present invention

By inserting the cylinder supporting member of the present invention into a cylinder, the peripheral surface of the cylinder can be well cut by a cutter without causing problems such as vibration of the cylinder, and thereby a cylindrical substrate with high dimensional precision can be provided. By using such a cylindrical substrate for an electrophotographic photoreceptor, high quality color images without color misalignment can be produced.

This document claims priority and contains subject matter related to Japanese Patent Applications Nos. 2005- and 2005-, filed on February 15, 2005, and March 3, 2005, respectively.

## Claims

**1.** A cylinder supporting member (A; B) for supporting a cylinder (608; 626) by being inserted into the cylinder, comprising:

a shaft (605; 623); and
a vibration absorbing member (601; 629) which is located overlying the shaft and which supports the cylinder while the lateral edge portion thereof elastically deforms along the shaft by being contacted with a part of the inner surface of the cylinder when the cylinder supporting member is inserted into the cylinder;

wherein the vibration absorbing member (601) comprises a plurality of elastic plates (601) having an opening through which the shaft (605) passes, wherein the lateral edge portion of the elastic plates (601) elastically deforms along the shaft (605) by being contacted with a part of the inner surface of the cylinder (608) when the cylinder supporting member is inserted into the cylinder,
**characterized in that** the cylinder supporting member further comprises a plurality of reinforcing members (602, 603) arranged on both sides of each elastic plate to reinforce the respective elastic plate and a plurality of spacers (604) overlying the shaft (605) to separate at regular intervals the combinations of the elastic plates and their reinforcing members arranged on both sides of the respective elastic plates.

**2.** The cylinder supporting member (A) according to Claim 1, wherein the reinforcing member (602, 603) has a diameter of from 50 to 95%, preferably from 60 to 90% and more preferably from 65 to 85%, of the inside diameter of the cylinder (608).

**3.** The cylinder supporting member (A) according to Claim 1 or 2, wherein the elastic plates (601) have a spring A hardness of from 50 to 95 Hs, preferably from 55 to 90 Hs and more preferably from 60 to 80 Hs, and wherein the hardness is measured by a method described in JIS K6301.

**4.** The cylinder supporting member (A) according to any one of Claims 1 to 3, wherein the elastic plates (601) have plural projections which radially extend and which are arranged at regular intervals in the circumferential direction of the elastic plate.

**5.** A method for cutting the peripheral surface of a cylinder (608; 626), comprising:

inserting the cylinder supporting member (A; B) according to any one of Claims 1 to 4 into the cylinder to support the cylinder with the cylinder supporting member; and
then cutting the peripheral surface of the cylinder while rotating the cylinder.

**6.** A cutting device for cutting the peripheral surface of a cylinder (608; 626), comprising:

the cylinder supporting member (A; B) according to any one of Claims 1 to 4 which is inserted into the cylinder to support the cylinder; and
a cutting tool (612) configured to cut the peripheral surface of the cylinder while rotating the cylinder.

## Patentansprüche

1. Zylinderhaltelement (A, B) zum Halten eines Zylinders (608; 626), indem es in den Zylinder eingesetzt wird, umfassend:

   einen Schaft (605; 623); und
   ein Vibrationsabsorbierelement (601, 629), welches über dem Schaft liegend angeordnet ist und welches den Zylinder hält, während der seitliche Randteil davon sich entlang des Schaftes elastisch verformt, indem er mit einem Teil der inneren Oberfläche des Zylinders kontaktiert wird, wenn das Zylinderhaltelement in den Zylinder eingeführt wird;

   wobei das Vibrationsabsorbierelement (601) eine Vielzahl von elastischen Platten umfasst, die eine Öffnung haben, durch welche der Schaft (605) hindurch geht, wobei der seitliche Randteil der elastischen Platten (601) sich entlang des Schaftes (605) elastisch verformt, indem er mit einem Teil der inneren Oberfläche des Zylinders (608) kontaktiert wird, wenn das Zylinderhaltelement in den Zylinder eingeführt wird,
   **dadurch gekennzeichnet, dass** das Zylindertragelement ferner eine Vielzahl von Verstärkungselementen (602, 603) umfasst, welche auf beiden Seiten der elastischen Platten angeordnet sind, um die jeweilige elastische Platte zu verstärken, und eine Vielzahl von Abstandshaltern (604), die über dem Schaft (605) liegend angeordnet sind, um in regelmäßigen Abständen die Kombinationen aus den elastischen Platten und deren an beiden Seiten der jeweiligen elastischen Platten angeordneten Verstärkungselementen zu trennen.

2. Zylinderhaltelement (A) gemäß dem Anspruch 1, wobei das Verstärkungselement (602, 603) einen Durchmesser von 50 bis 95%, vorzugsweise 60 bis 90% und bevorzugter 65 bis 85% des Innendurchmessers des Zylinders (608) aufweist.

3. Zylinderhaltelement (A) gemäß dem Anspruch 1 oder 2, wobei die elastischen Platten (601) eine Federhärte A von 50 bis 95 Hs, vorzugsweise 55 bis 90 Hs und vorzugsweise 60 bis 80 Hs aufweisen und wobei die Härte mit dem in JIS K6301 beschriebenen Verfahren gemessen wird.

4. Zylinderhaltelement (A) gemäß irgendeinem der Ansprüche 1 bis 3, wobei die elastischen Platten (601) mehrere Vorsprünge haben, die sich radial erstrecken und welche in regelmäßigen Abständen in der Umfangsrichtung der elastischen Platte angeordnet sind.

5. Verfahren zum Fräsen der Umfangsoberfläche eines Zylinders (608; 626), umfassend:

   Einsetzen des Zylinderhaltelementes gemäß irgendeinem der Ansprüche 1 bis 4 in den Zylinder, um den Zylinder mit dem Zylinderhaltelement zu halten; und
   dann Fräsen der Umfangsoberfläche des Zylinders, während der Zylinder in Rotation versetzt wird.

6. Fräsvorrichtung zum Fräsen der Umfangsoberfläche eines Zylinders (608; 626), umfassend
   das Zylinderhaltelement gemäß irgendeinem der Ansprüche 1 bis 4, welches in den Zylinder eingesetzt ist, um den Zylinder zu halten; und
   ein Fräswerkzeug (612), das konfiguriert ist, die Umfangsoberfläche des Zylinders zu fräsen, während der Zylinder in Rotation versetzt wird.

## Revendications

1. Élément de support de cylindre (A ; B) pour supporter un cylindre (608 ; 626) en étant inséré dans le cylindre, comportant :

   un arbre (605 ; 623) ; et
   un élément absorbant les vibrations (601 ; 629) qui est situé au-dessus de l’arbre et qui supporte le cylindre

tandis que la partie de bord latéral de celui-ci se déforme élastiquement le long de l'arbre en étant en contact avec une partie de la surface intérieure du cylindre lorsque l'élément de support de cylindre est inséré dans le cylindre;

dans lequel l'élément absorbant les vibrations (601) comprend une pluralité de plaques élastiques (601) présentant un orifice à travers lequel passe l'arbre (605), dans lequel la partie de bord latéral des plaques élastiques (601) se déforme élastiquement long de l'arbre (605) en étant en contact avec une partie de la surface interne du cylindre (608) lorsque l'élément de support de cylindre est inséré dans le cylindre,
**caractérisé en ce que** l'élément de support de cylindre comporte en outre une pluralité d'éléments de renforcement (602, 603) disposés sur les deux côtés de chaque plaque élastique pour renforcer la plaque élastique respective et une pluralité d'éléments d'écartement (604) situés au-dessus de l'arbre (605) pour séparer à des intervalles réguliers les combinaisons des plaques élastiques et de leurs éléments de renforcement disposés sur les deux côtés des plaques élastiques respectives.

**2.** Élément de support de cylindre (A) selon la revendication 1, dans lequel l'élément de renforcement (602, 603) présente un diamètre de 50 à 95%, de préférence de 60 à 90% et plus préférablement de 65 à 85%, du diamètre intérieur du cylindre (608).

**3.** Élément de support de cylindre (A) selon la revendication 1 ou 2, dans lequel les plaques élastiques (601) possèdent une dureté A élastique de 50 à 95 Hs, de préférence de 55 à 90 Hs et plus préférablement de 60 à 80 Hs, et dans lequel la dureté est mesurée par un procédé décrit dans JIS K6301.

**4.** Élément de support de cylindre (A) selon l'une quelconque des revendications 1 à 3, dans lequel les plaques élastiques (101) possèdent plusieurs parties saillantes qui s'étendent radialement et qui sont disposées à des intervalles réguliers dans la direction circonférentielle de la plaque élastique.

**5.** Procédé pour découper la surface périphérique d'un cylindre (608 ; 626), comportant :

l'insertion de l'élément de support de cylindre (A ; B) selon l'une quelconque des revendications 1 à 4 dans le cylindre pour supporter le cylindre avec l'élément de support de cylindre ; et
la découpe ensuite de la surface périphérique du cylindre lors de la rotation du cylindre.

**6.** Dispositif de découpe pour découper la surface périphérique de cylindre (608 ; 626), comportant :

l'élément de support de cylindre (A ; B) selon l'une quelconque des revendications 1 à 4, qui est inséré dans le cylindre pour supporter le cylindre ; et
un outil de découpe (612) configuré pour découper la surface périphérique du cylindre lors de la rotation du cylindre.

FIG. 1

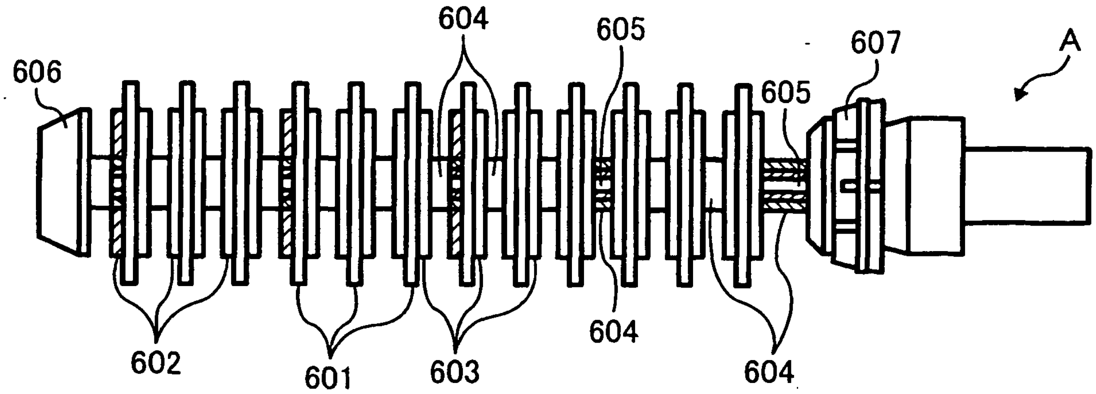


FIG. 2

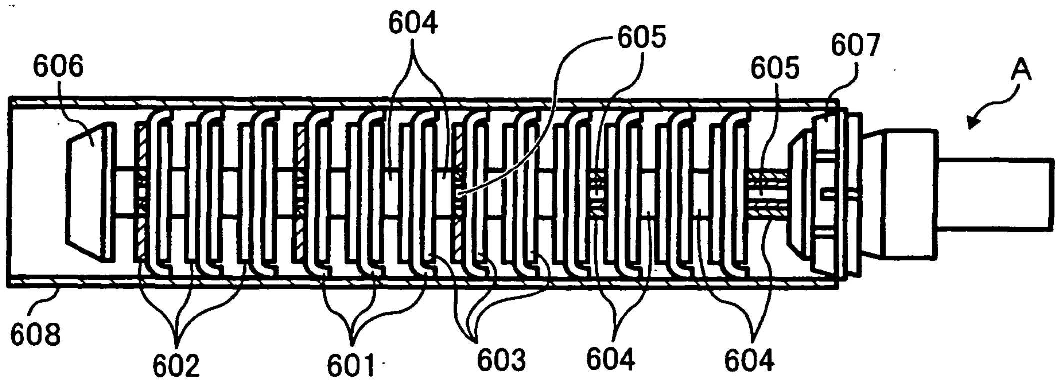


FIG. 3

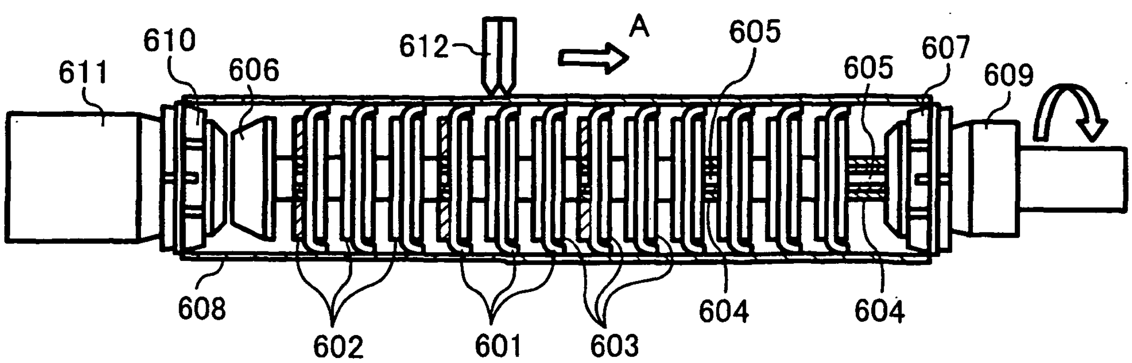

FIG. 4A

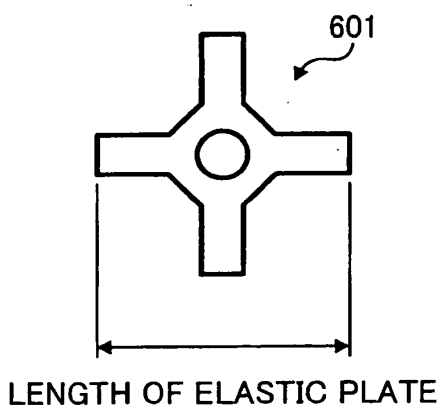


FIG. 4B

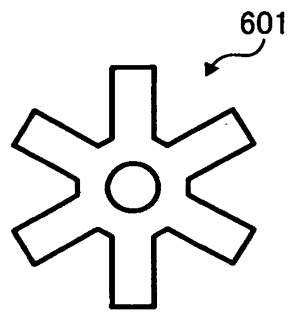


FIG. 4C

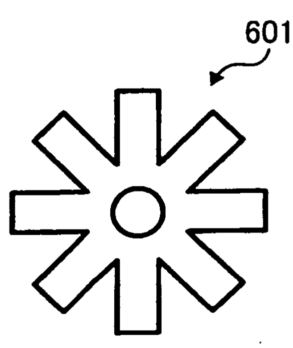

FIG. 5

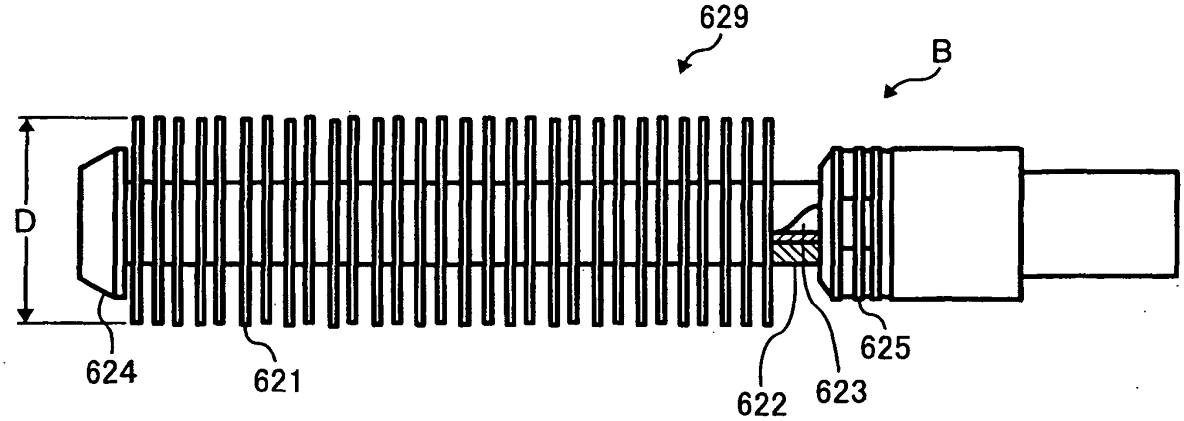


FIG. 6

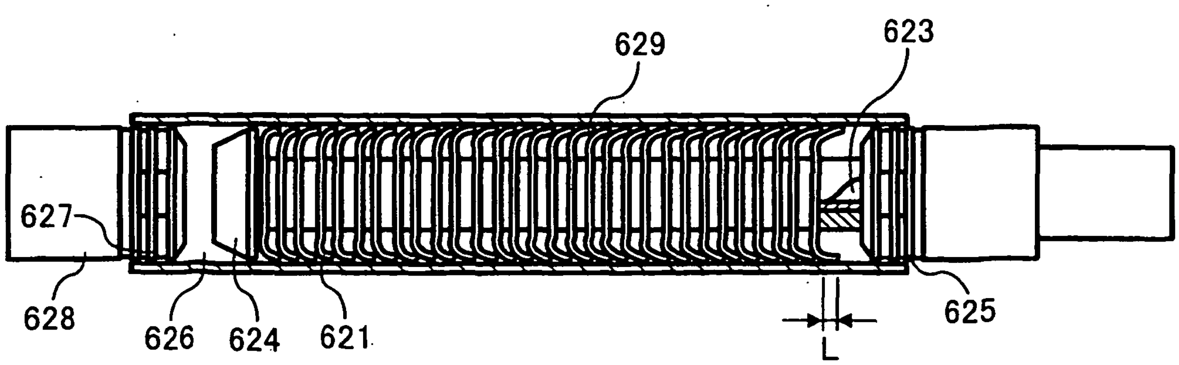

FIG. 7A

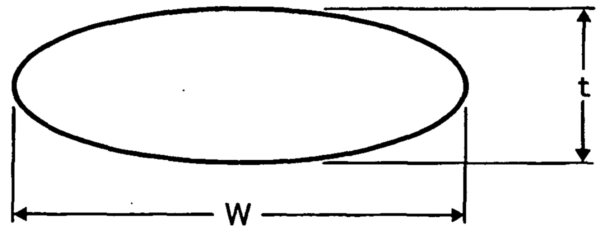


FIG. 7B

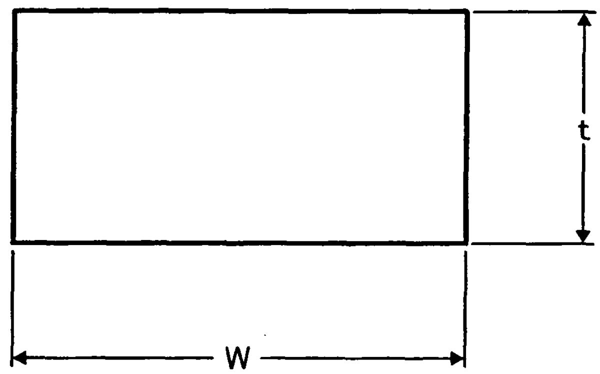


FIG. 7C

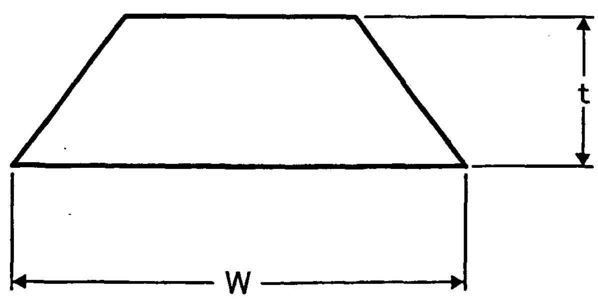

FIG. 8

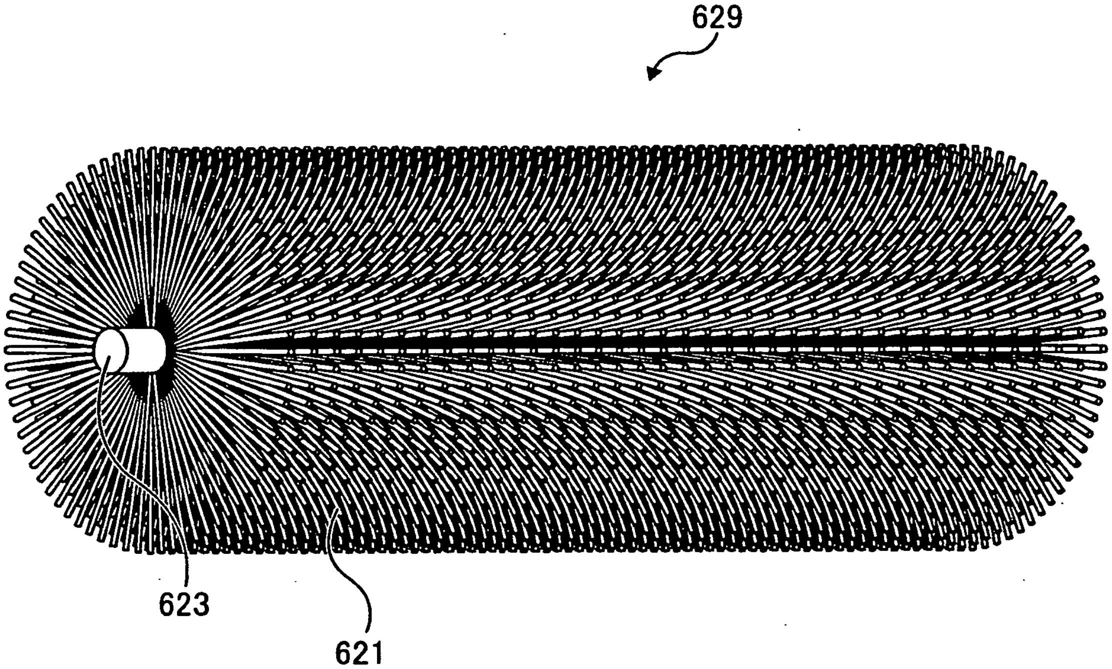


FIG. 9
BACKGROUND ART

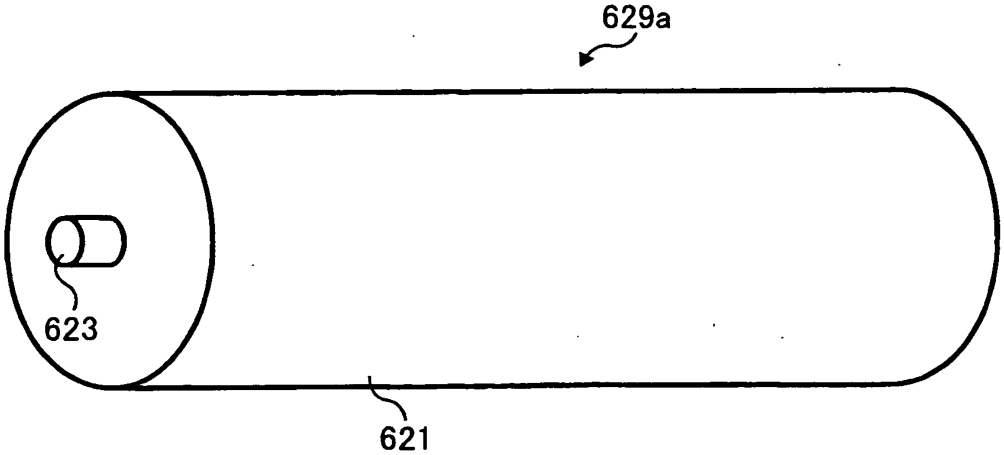

FIG. 10

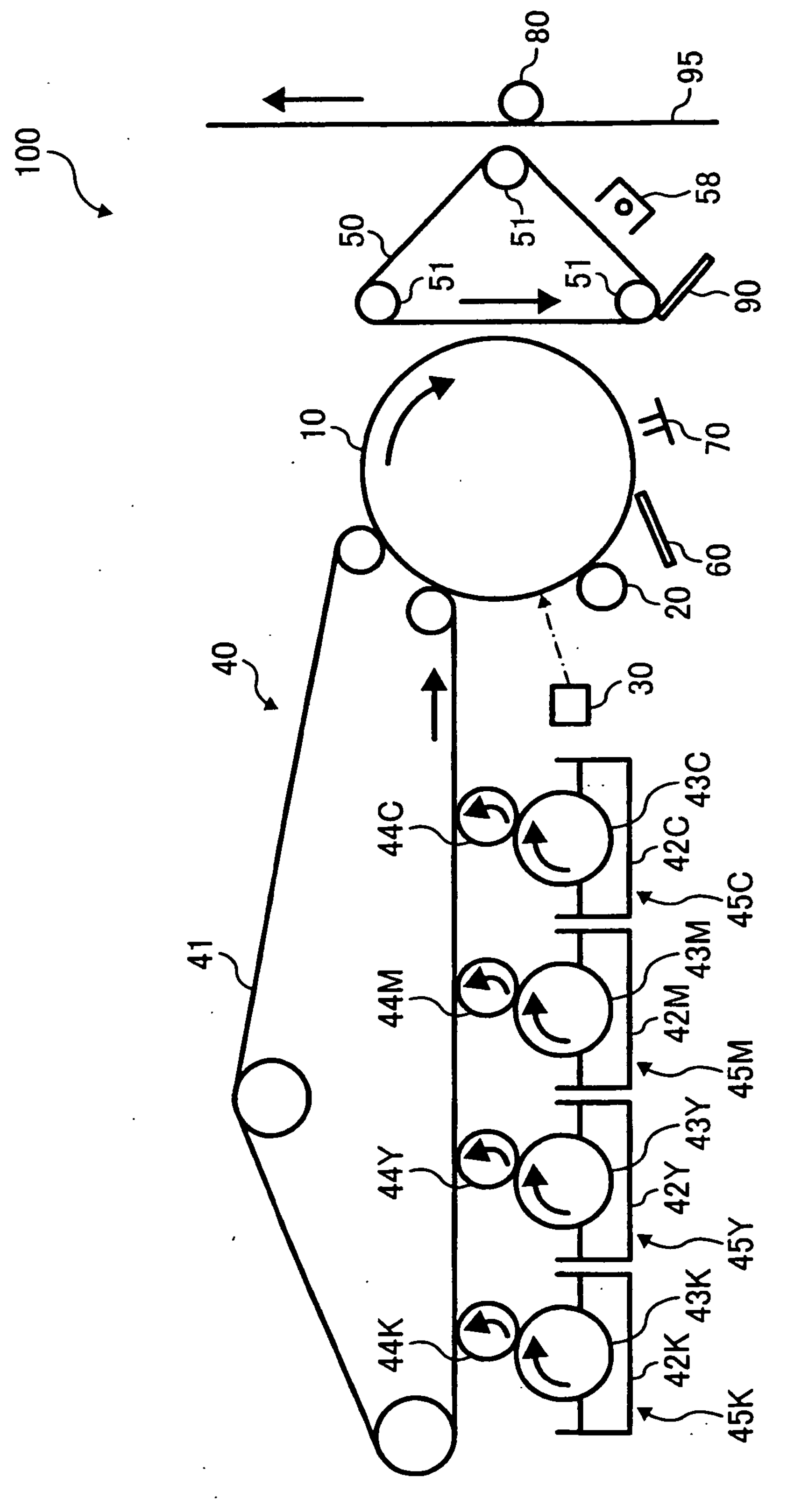
100
80
95
50
51
51
51
58
90
10
70
60
20
40
30
41
44C
43C
42C
45C
44M
43M
42M
45M
44Y
43Y
42Y
45Y
44K
43K
42K
45K

FIG. 11

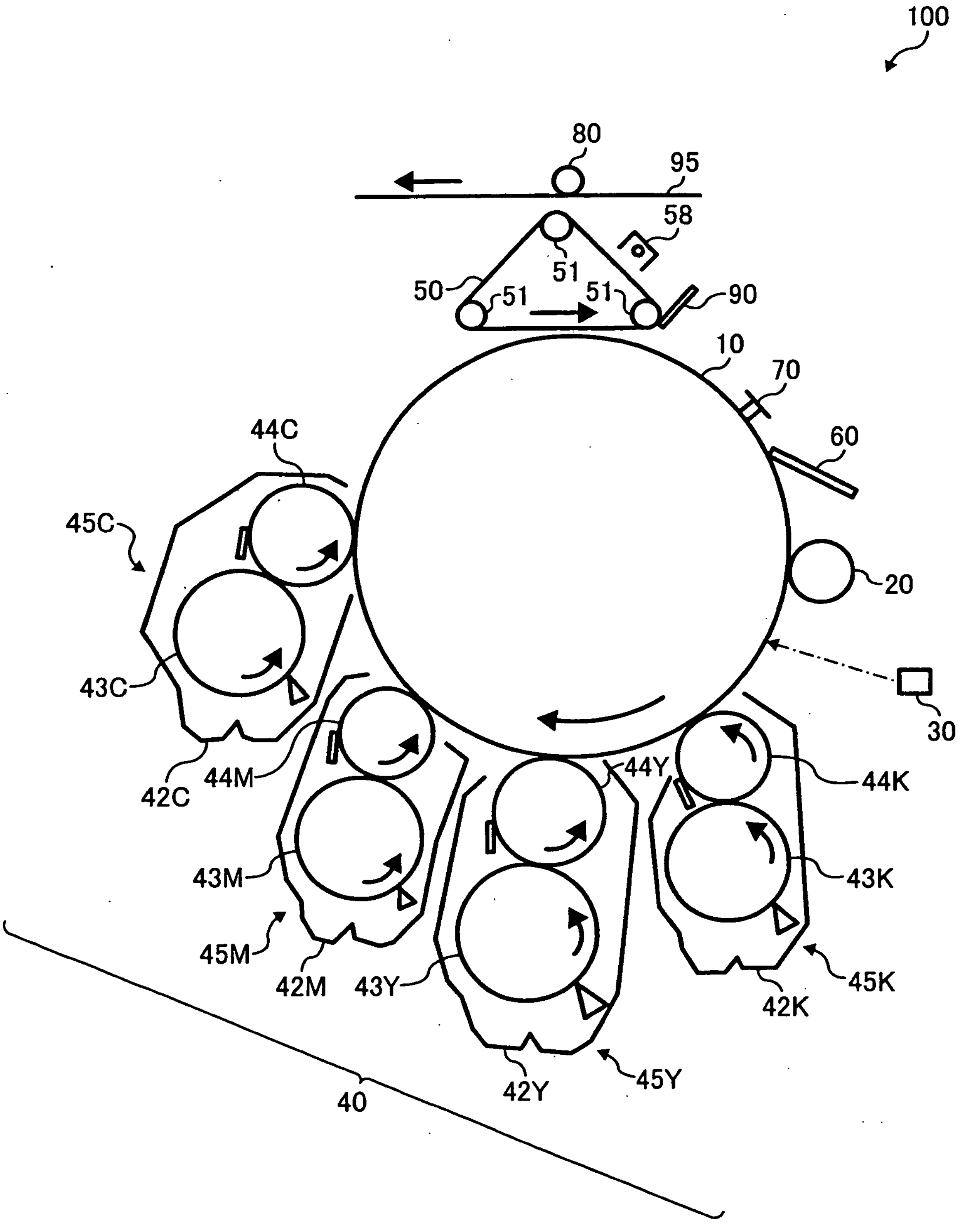
100
80
95
58
51
50
51
51
90
10
70
60
44C
45C
20
43C
30
42C
44M
44Y
44K
43M
43K
45M
42M
43Y
42K
45K
40
42Y
45Y

FIG. 12

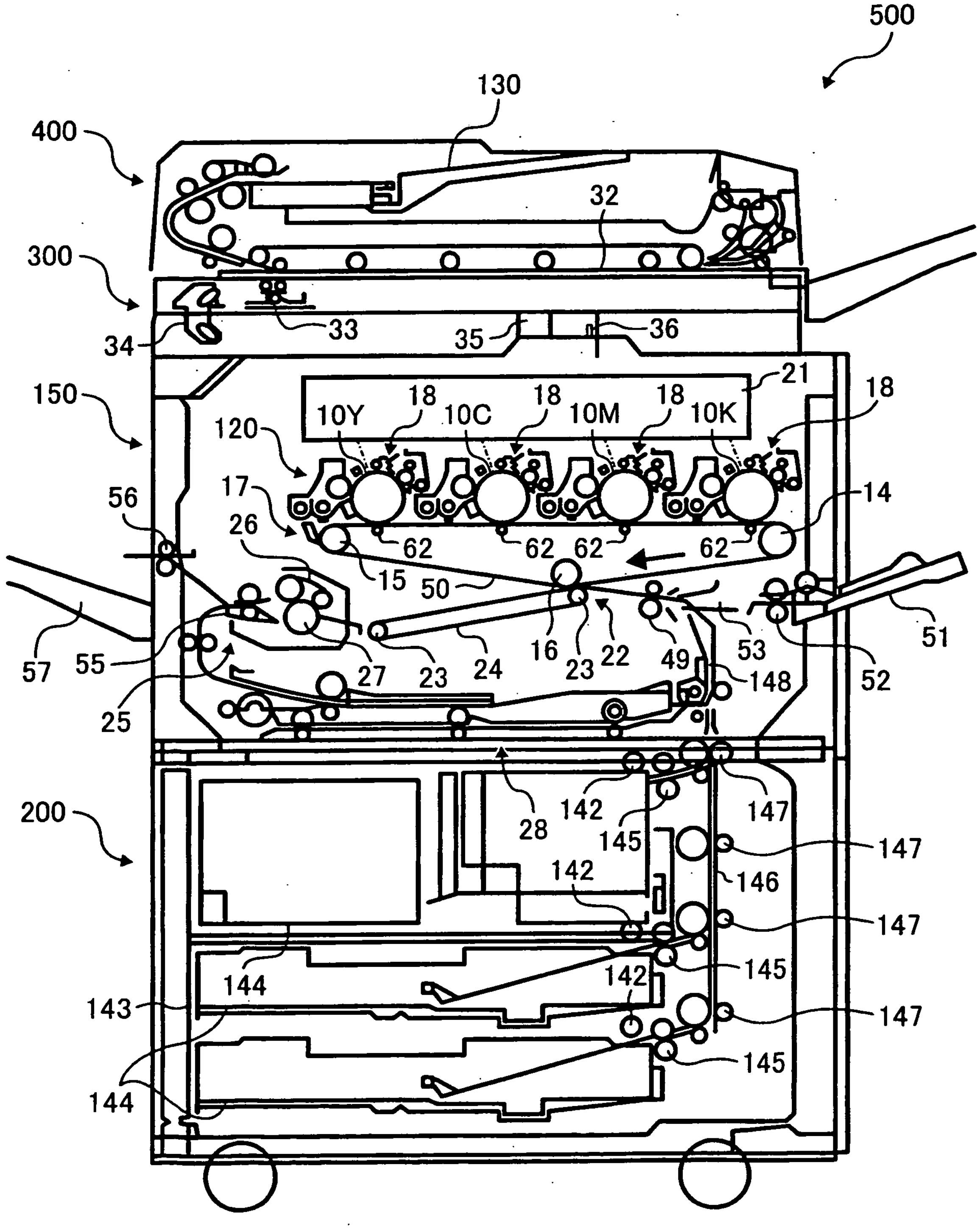
500
130
400
32
300
34
33
35
36
150
21
18
10Y
18
10C
18
10M
18
10K
18
120
17
56
14
26
62
62
62
62
15
50
16
23
22
49
53
51
52
57
55
27
23
24
148
25
200
28
142
145
147
147
146
142
147
144
145
142
143
147
144
145

FIG. 13

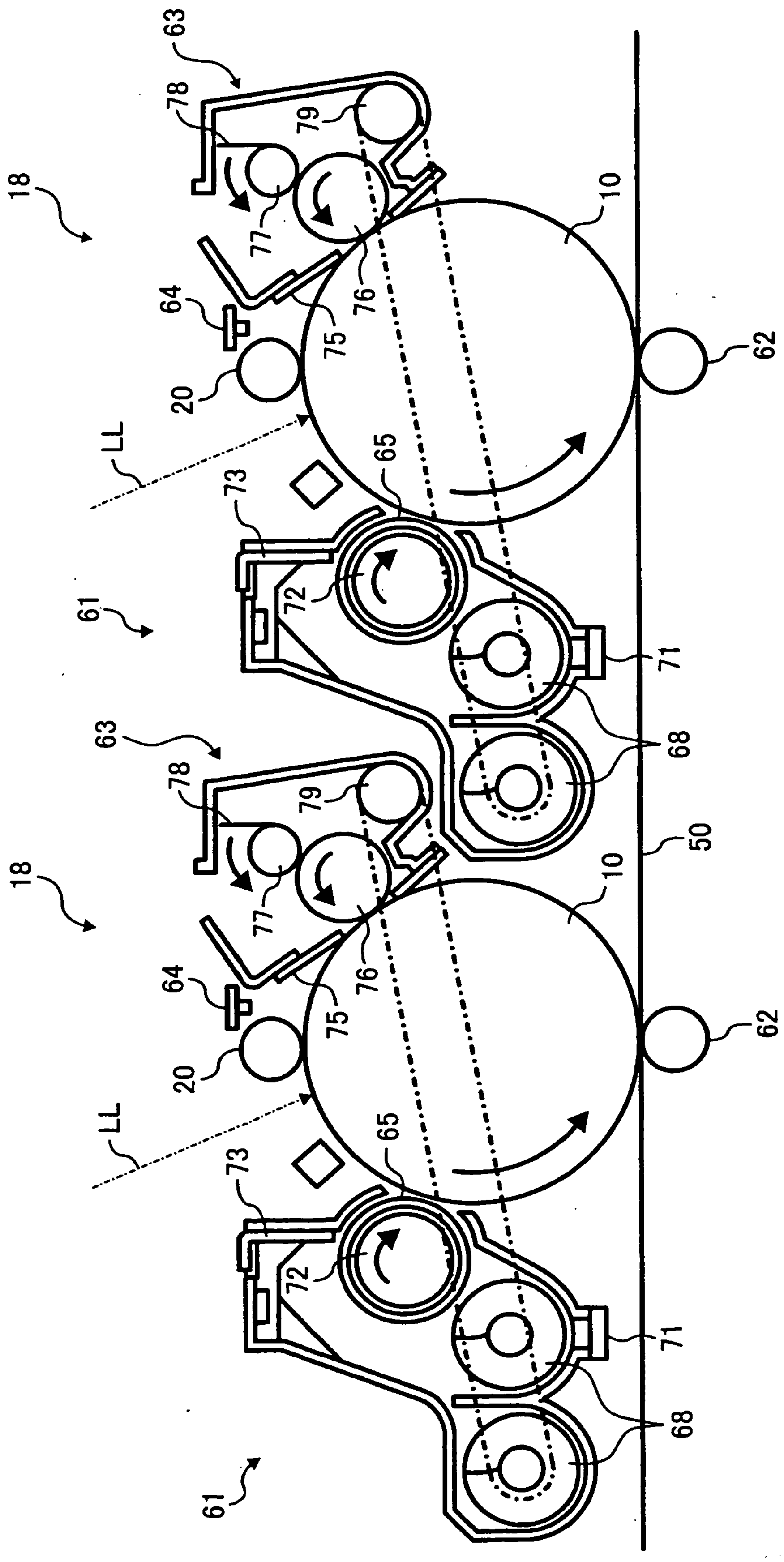

FIG. 14

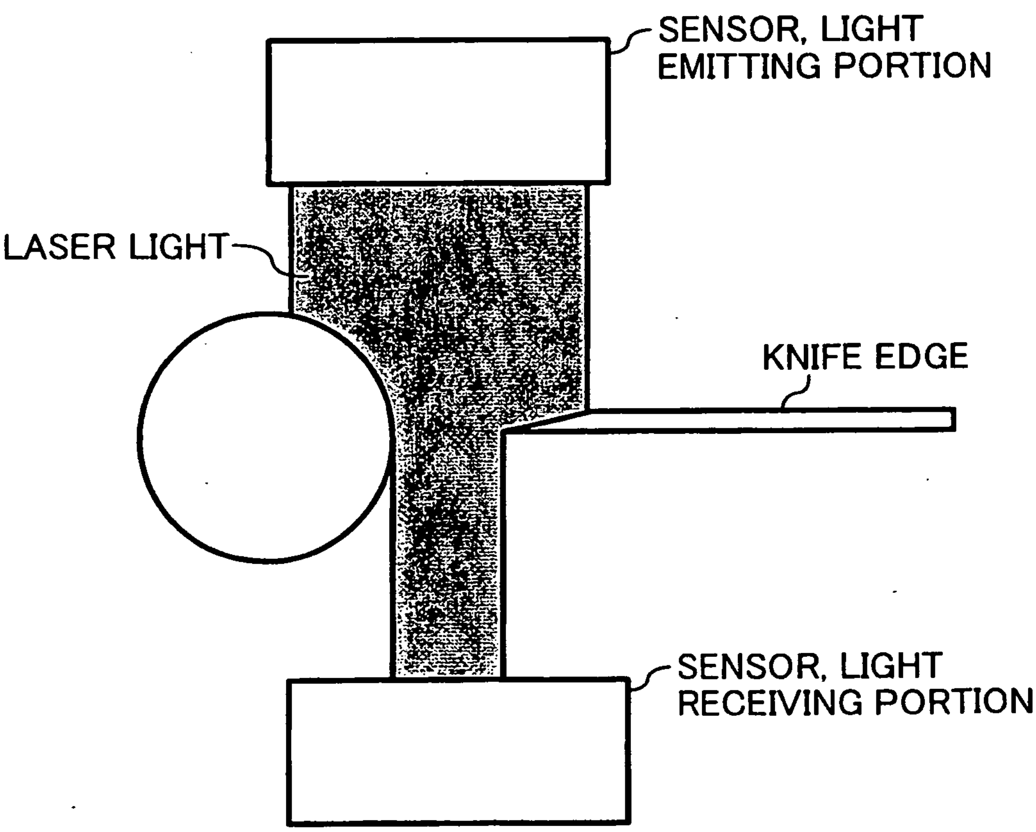
SENSOR, LIGHT
EMITTING PORTION
LASER LIGHT
KNIFE EDGE
SENSOR, LIGHT
RECEIVING PORTION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10314843 A
- JP 11160901 A
- JP 2003167361 A
- JP 6198501 A
- JP 6304803 A
- JP 9234639 A
- JP 2604434 A
- JP 8052680 A
- JP 2002224905 A
- JP 9239604 A
- US 5893568 A
- US 6212342 A
- JP 50082056 A
- JP 54009632 A
- JP 54011737 A
- JP 4175337 A
- JP 4183719 A
- JP 6234841 A
- JP 57078402 A
- JP 61020953 A
- JP 61296358 A
- JP 1134456 A
- JP 1179164 A
- JP 3180851 A
- JP 3180852 A
- JP 3050555 A
- JP 5310904 A
- JP 6234840 A
- JP 63285552 A
- JP 1088461 A
- JP 4264130 A
- JP 4264131 A
- JP 4264132 A
- JP 4264133 A
- JP 4289867 A
- JP 1134457 A
- JP 2282264 A
- JP 2304452 A
- JP 4133065 A
- JP 4133066 A
- JP 5040350 A
- JP 5202135 A
- JP 51073888 A
- JP 56150749 A
- JP 6234836 A
- JP 6234837 A
- JP 64001728 A
- JP 6413061 B
- JP 6419049 B
- JP 4011627 A
- JP 4225014 A
- JP 4230767 A
- JP 4320420 A
- JP 5232727 A
- JP 7056374 A
- JP 9127713 A
- JP 9222740 A
- JP 9265197 A
- JP 9211877 A
- JP 9304956 A
- JP 3109406 A